# EUROPEAN PATENT SPECIFICATION

(11) **EP 4 529 200 B1**
(45) Date of publication and mention of the grant of the patent: **21.10.2026**
(21) Application number: 23834361.0
(22) Date of filing: 06.02.2023
(51) Int. Cl.: G03B 17/04, G03B 30/00, H04N 23/00, H04N 23/57

(54) **CAMERA APPARATUS AND ELECTRONIC DEVICE**
KAMERAVORRICHTUNG UND ELEKTRONISCHE VORRICHTUNG
APPAREIL DE CAMÉRA ET DISPOSITIF ÉLECTRONIQUE

(30) Priority: 06.07.2022 CN 202210790389
(43) Date of publication of application: 26.03.2025
(73) Proprietor: Huawei Technologies Co., Ltd., Shenzhen, Guangdong 518129 (CN)
(72) Inventor: WU, Wen, Shenzhen, Guangdong 518129 (CN); MA, Chunjun, Shenzhen, Guangdong 518129 (CN); ZUO, Yangping, Shenzhen, Guangdong 518129 (CN); WANG, Bo, Shenzhen, Guangdong 518129 (CN); JIAN, Lei, Shenzhen, Guangdong 518129 (CN); SI, Xiaochen, Shenzhen, Guangdong 518129 (CN); LIU, Zhe, Shenzhen, Guangdong 518129 (CN); ZOU, Mengruo, Shenzhen, Guangdong 518129 (CN)
(74) Representative: MERH-IP Matias Erny Reichl Hoffmann Patentanwälte PartG mbB
(86) International application number: PCT/CN2023/074503
(87) International publication number: WO 2024/007576

(56) References cited:
- WO-A1-2022/111386
- CN-A- 112 653 823
- CN-A- 112 825 541
- CN-A- 113 347 342
- CN-A- 113 422 898
- CN-A- 114 578 633
- CN-U- 215 934 993
- CN-U- 216 078 924
- CN-U- 216 619 059
- US-A1- 2020 244 786
- US-A1- 2020 366 772
- US-A1- 2022 146 910

## Description

### TECHNICAL FIELD

This application relates to the field of terminal technologies, and in particular, to a camera apparatus and an electronic device.

### BACKGROUND

An image shooting function is already an indispensable function for an electronic device (for example, a mobile phone or a tablet). A camera apparatus becomes increasingly large in size for good image quality and a good image shooting effect. This results in a severe protrusion on an appearance of the electronic device, and affects the appearance of the electronic device.

In a related technology, the camera apparatus may be disposed as a liftable structure. During image shooting, a camera extends from the electronic device through a lifting apparatus, to expand an available optical space of the camera for high-quality image shooting. When image shooting is not needed, the camera retracts into the electronic device through the lifting apparatus, to avoid that protrusion of the camera from the electronic device affects the appearance of the electronic device. CN113422898A discloses related art with such a liftable structure.

However, lifting precision of the camera is affected by the lifting apparatus during extension and retraction of the camera in the electronic device. This affects image shooting performance of the camera apparatus.

### SUMMARY

The present invention is defined by the independent claims. In the following, parts of the description and drawings referring to examples which do not necessarily comprise all features of the invention as currently claimed are not represented as embodiments of the invention but as examples useful for understanding the embodiments of the invention. Embodiments of this application provide a camera apparatus and an electronic device, to improve controllability of lifting precision of a camera, and ensure image shooting performance of the camera apparatus and the electronic device.

According to a first aspect, an embodiment of this application provides a camera apparatus, including: a bearing member, a first drive assembly, a camera module, a rotating member, and a lifting member, where the first drive assembly is mounted on the bearing member, and the rotating member is rotatably disposed on the bearing member; the first drive assembly fits the rotating member, the rotating member fits the lifting member, and the rotating member is configured to drive the lifting member to ascend or descend during rotation; and
the camera module includes a camera and a second drive assembly, the second drive assembly is connected to the camera, and the second drive assembly is configured to drive the camera to ascend or descend. Therein, the lifting member is decoupled from the camera so that it does not drive the camera to ascend or descend.

According to the camera apparatus provided in this embodiment of this application, the camera apparatus includes the bearing member, the first drive assembly, the camera module, the rotating member, and the lifting member. The first drive assembly is mounted on the bearing member, the rotating member is rotatably disposed on the bearing member, the rotating member fits the lifting member, and the rotating member is configured to drive the lifting member to ascend or descend. The first drive assembly fits the rotating member, the first drive assembly drives the rotating member to rotate, and the rotating member is configured to drive the lifting member to ascend or descend during rotation. The camera module includes the camera and the second drive assembly, the second drive assembly is connected to the camera, and the second drive assembly is configured to drive the camera to ascend or descend. The ascending and descending of the camera are controlled by the second drive assembly, the lifting member does not control the ascending and descending of the camera, and the lifting member is decoupled from the camera. This can avoid impact of the lifting member on lifting precision of the camera, reduce structural components affecting the lifting precision of the camera, and improve controllability of the lifting precision of the camera, to ensure image shooting performance of the camera apparatus.

Both the rotating member and the lifting member are tubular, an accommodation area is provided on an inner side of the rotating member and the lifting member, and the camera is located in the accommodation area and ascends and descends in the accommodation area.

In a possible implementation, a guide member is further included. An inclined guide channel is disposed on one of the rotating member and the lifting member, the other of the rotating member and the lifting member is connected to a first end of the guide member, a bump that fits the guide channel is disposed on a second end of the guide member, and the bump is inserted into the guide channel and moves in extension direction of the guide channel.

In this way, when the rotating member rotates, the lifting member ascends or descends through fitting between the guide channel and the guide member.

In a possible implementation, the guide channel includes a first inner wall surface, and the first inner wall surface is located on a side that is of the bump and that is away from the first end.

In this way, the lifting member can ascend under interaction between the first inner wall surface and the bump.

In a possible implementation, the guide channel includes a second inner wall surface spaced apart from the first inner wall surface, and the second inner wall surface is located on a side that is of the bump and that faces the first end.

In this way, the lifting member can descend under interaction between the second inner wall surface and the bump.

In a possible implementation, a cushioning member is disposed on one, connected to the first end, of the rotating member and the lifting member, the first end is connected to the cushioning member, and the cushioning member is configured to implement a cushioning function when the lifting member moves toward the bearing member.

In this way, the cushioning member is configured to implement the cushioning function when the lifting member moves toward the bearing member. This can reduce or avoid damage to the camera apparatus by external forces.

In a possible implementation, a distance detection member and a control member are further included, where the control member is electrically connected to the distance detection member and the camera module, and the distance detection member is configured to detect a distance between the lifting member and the bearing member; and
the control member is configured to control the camera to move away from the bearing member when it is determined that the distance between the lifting member and the bearing member becomes larger; or
the control member is configured to control the camera to move toward the bearing member when it is determined that the distance between the lifting member and the bearing member becomes smaller.

In this way, when an external force acts on the protective cover, the protective cover drives the lifting member to descend, the distance between the lifting member and the bearing member becomes smaller, and the control member controls the camera to descend, to avoid damage to the camera module when the protective cover descends.

In a possible implementation, a first seal is annularly disposed between the camera module and the lifting member, a first connection end of the first seal is connected to the lifting member, and a second connection end of the first seal is connected to the camera module.

In this way, the first seal is configured to prevent dust from entering and reaching the top of the camera module through a space between the camera module and the lifting member, to avoid impact on light collection of the camera module.

In a possible implementation, the first seal is a deformable member, and the second connection end is static relative to at least a part of the camera module.

In this way, the first seal may deform in ascending and descending processes, to avoid damage to the first seal caused by a change of a distance between the first connection end and the second connection end. In addition, the camera apparatus may be sealed in an entire process in an extending state, a retracting state, and an intermediate state.

In a possible implementation, a sealing ring is further included, where the sealing ring is sleeved on a circumferential outer wall surface of the camera module and is detachably connected to the camera module, and the second connection end is connected to the sealing ring.

In this way, it is convenient to repair and replace the sealing ring.

In a possible implementation, the first seal is a rigid member, the second connection end is movably connected to the camera module, a limiting groove is annularly provided on a circumferential outer wall surface of the camera module, and at least a part of the second connection end is located in the limiting groove;
in a thickness direction of the camera apparatus, the limiting groove includes a first groove side wall and a second groove side wall that are spaced apart, and the first groove side wall is located on a side that is of the second groove side wall and that faces the bearing member; and
when the camera apparatus is in an extending state, the second connection end abuts against the second groove side wall; or
when the camera apparatus is in a retracting state, the second connection end abuts against the first groove side wall.

In this way, when the camera apparatus is in the extending state or the retracting state, sealing is implemented between the second connection end and the camera module, to prevent dust from entering and reaching the top of the camera module 220 through a space between the camera module and the lifting member, to avoid impact on light collection of the camera module.

In a possible implementation, a first abutting ring and a second abutting ring are annularly disposed on the circumferential outer wall surface of the camera module, the first abutting ring and the second abutting ring spaced apart in the thickness direction of the camera apparatus, the first abutting ring is located on a side that is of the second abutting ring and that faces the bearing member, the first groove side wall is formed by an outer wall on a side that is of the first abutting ring and that faces the second abutting ring, and the second groove side wall is formed by an outer wall on a side that is of the second abutting ring and that faces the first abutting ring.

In a possible implementation, both the first abutting ring and the second abutting ring are fastened to the camera module; or
both the first abutting ring and the second abutting ring are detachably connected to the camera module.

In this way, there are a plurality of manners of disposing the first abutting ring and the second abutting ring, and the first abutting ring and the second abutting ring can be applied to a large quantity of scenarios.

In a possible implementation, the first seal is an elastic seal in a stretched state; or
the first seal is a foldable seal, and when the camera apparatus is in an extending state, the first seal is in an unfolded state, or when the camera apparatus is in a retracting state, the first seal is in a folded state.

In a possible implementation, a protective cover is further included, where at least a part of the protective cover is sleeved on an outer side of the lifting member; and
a second seal is annularly disposed between the protective cover located on the outer side of the lifting member and the lifting member, the second seal is a deformable member, one end of the second seal is connected to the protective cover, and the other end of the second seal is connected to the lifting member.

In this way, the second seal can prevent water of an external environment from entering the camera apparatus through a space between the lifting member and the protective cover, to protect the camera apparatus.

In a possible implementation, a protective cover and an elastic member in a compressed state are further included, where at least a part of the protective cover is connected to the bearing member, the elastic member is located between the protective cover connected to the bearing member and the lifting member, one end of the elastic member is connected to the protective cover, and the other end of the elastic member is connected to a side that is of the lifting member and that is away from the bearing member.

In this way, the elastic member may provide a driving force toward the bearing member for the lifting member, so that the lifting member descends.

In a possible implementation, a protective cover and an anti-impact member are further included, where at least a part of the protective cover is connected to a side that is of the lifting member and that is away from the bearing member, and the anti-impact member is located on a side that is of the camera module and that is away from the bearing member; and
in a thickness direction of the camera apparatus, a spacing between the anti-impact member and the protective cover is less than a spacing between the camera module and the protective cover.

In this way, when a top protective cover is subject to an external force, if the top protective cover needs to be in contact with a top structure of the camera module, the top protective cover needs to be first in contact with the anti-impact member. This can protect the top structure of the camera module.

According to a second aspect, an embodiment of this application provides an electronic device, including a housing and the camera apparatus according to the first aspect, where at least a part of the camera apparatus is located in the housing.

According to the electronic device provided in this embodiment of this application, the electronic device includes the camera apparatus. The camera apparatus includes the bearing member, the first drive assembly, the camera module, the rotating member, and the lifting member. The first drive assembly is mounted on the bearing member, the rotating member is rotatably disposed on the bearing member, the rotating member fits the lifting member, and the rotating member is configured to drive the lifting member to ascend or descend. The first drive assembly fits the rotating member, the first drive assembly drives the rotating member to rotate, and the rotating member is configured to drive the lifting member to ascend or descend during rotation. The camera module includes the camera and the second drive assembly, the second drive assembly is connected to the camera, and the second drive assembly is configured to drive the camera to ascend or descend. The ascending and descending of the camera are controlled by the second drive assembly, the lifting member does not control the ascending and descending of the camera, and the lifting member is decoupled from the camera. This can avoid impact of the lifting member on lifting precision of the camera, reduce structural components affecting the lifting precision of the camera, and improve controllability of the lifting precision of the camera, to ensure image shooting performance of the camera apparatus.

A structure of this application and other objectives and beneficial effects thereof will be clearer and more comprehensible by describing preferred embodiments with reference to the accompanying drawings.

### BRIEF DESCRIPTION OF DRAWINGS

FIG. 1 is a diagram of a structure of an electronic device according to an embodiment of this application;
FIG. 2 is a diagram of a structure in which a camera apparatus is assembled in an electronic device according to an embodiment of this application;
FIG. 3 is an exploded diagram of an electronic device according to an embodiment of this application;
FIG. 4 is a top view of a camera apparatus according to an embodiment of this application;
FIG. 5 is an exploded diagram of a camera apparatus according to an embodiment of this application;
FIG. 6 is a sectional view in an E-E direction in FIG. 4;
FIG. 7 is a diagram of a partial structure of a camera apparatus according to an embodiment of this application;
FIG. 8 is a diagram of a structure of a camera apparatus in an extending state according to an embodiment of this application;
FIG. 9 is a diagram of a structure of a lifting member in an extending state according to an embodiment of this application;
FIG. 10 is a diagram of another structure of a lifting member in an extending state according to an embodiment of this application;
FIG. 11 is a diagram of structures of a rotating member, a guide member, and a cushioning member according to an embodiment of this application;
FIG. 12 is a diagram of structures of a guide channel and a guide member according to an embodiment of this application;
FIG. 13 is another diagram of structures of a guide channel and a guide member according to an embodiment of this application;
FIG. 14 is another diagram of structures of a guide channel and a guide member according to an embodiment of this application;
FIG. 15 is another diagram of structures of a guide channel and a guide member according to an embodiment of this application;
FIG. 16 is another diagram of structures of a guide channel and a guide member according to an embodiment of this application;
FIG. 17 is a diagram of a structure of a guide channel according to an embodiment of this application;
FIG. 18 is a diagram of a structure in which there are a plurality of guide members according to an embodiment of this application;
FIG. 19 is another diagram ofa structure in which there are a plurality of guide members according to an embodiment of this application;
FIG. 20 is a diagram of a structure of a first elastic member in a case in which a lifting member is in a retracting state according to an embodiment of this application;
FIG. 21 is a diagram of a structure of a first elastic member in a case in which a lifting member is in an extending state according to an embodiment of this application;
FIG. 22 is a diagram of a structure of a first seal in an unfolded state according to an embodiment of this application;
FIG. 23 is a diagram of a structure of a first seal in a folded state according to an embodiment of this application;
FIG. 24 is a diagram of a structure of a first seal in a case in which a lifting member is in a retracting state according to an embodiment of this application;
FIG. 25 is a diagram of a structure of a first seal in a case in which a lifting member is in an extending state according to an embodiment of this application;
FIG. 26 is a diagram of structures of a first abutting ring and a second abutting ring according to an embodiment this application;
FIG. 27 is another diagram of structures of a first abutting ring and a second abutting ring according to an embodiment this application;
FIG. 28 is another diagram of structures of a first abutting ring and a second abutting ring according to an embodiment this application;
FIG. 29 is another diagram of structures of a first abutting ring and a second abutting ring according to an embodiment this application;
FIG. 30 is a diagram of a structure of a second seal in an unfolded state according to an embodiment of this application;
FIG. 31 is a diagram of a structure of a second seal in a folded state according to an embodiment of this application;
FIG. 32 is a diagram of structures of a bearing member and a drive cover according to an embodiment of this application; and
FIG. 33 is a diagram of a structure of a drive assembly according to embodiment of this application.

### Description of reference numerals:

100: electronic device; 110: display; 120: rear cover;
121: mounting hole; 130: middle frame; 131: side frame;
132: middle plate; 140: main circuit board; 150: battery;
200: camera apparatus; 201: first elastic member; 202: bottom protection member;
203: sub-circuit board; 204: anti-impact member; 205: cushioning member;
210: bearing member; 211: first accommodation groove; 212: second accommodation groove;
2121: first arc surface; 213: hollow area; 220: camera module;
220a: limiting groove; 221: first groove side wall; 222: second groove side wall;
223: first abutting ring; 224: second abutting ring; 230: rotating member;
230a: mounting area; 231: first limiting member; 232: second limiting member;
233: third limiting member; 2342: second arc surface; 235: tooth structure;
240: lifting member; 241: limiting recess part; 250: guide member;
251: first end; 252: second end; 253: bump;
254: insertion part; 260: guide channel; 260a: first channel;
260b: second channel; 261: first inner wall surface; 262: second inner wall surface;
263: baffle wall; 271: first seal; 2711: first connection end;
2712: second connection end; 2713: sealing ring; 2714: abutting part;
272: second seal; 2723: third connection end; 2724: fourth connection end;
273: third seal; 274: fourth seal; 275: fifth seal;
276: sixth seal; 277: seventh seal; 280: protective cover;
281: top protective cover; 282: inner protective cover; 2821: first extension part;
2822: second extension part; 2823: limiting protrusion part; 283: outer protective cover;
2833: third extension part; 2834: fourth extension part; 284: light-transmitting member;
285: light-transmitting hole; 290: first drive assembly; 291: first gear;
292: second gear; 293: drive member; 294: worm gear; and
295: drive cover; 296: worm.

### DESCRIPTION OF EMBODIMENTS

Terms used in embodiments of this application are only used to explain specific embodiments of this application, but are not intended to limit this application.

In a related technology, with development of a camera apparatus on an electronic device, an optical function of a camera becomes powerful. This results in a larger size of the camera apparatus and a severe protrusion on an appearance of the electronic device, and affects appearance exquisiteness of the electronic device. Being disposed as a liftable structure, the camera apparatus can have a large available optical space during image shooting, and a small size when image shooting is not required, thereby reducing impact on an appearance of the electronic device.

The camera apparatus may include a camera module and a lifting apparatus, where the lifting apparatus is configured to drive the camera module to ascend or descend. The camera module includes a camera and a motor, and when the camera is in an extending state, a focal length of the camera is adjusted through the motor.

However, because a lifting position of the camera is affected by both the lifting apparatus and the motor, there are many structural components affecting lifting precision of the camera, and the lifting precision of the camera is difficult to control, thereby affecting image shooting performance of the camera apparatus.

Based on the foregoing problem, embodiments of this application provide a camera apparatus and an electronic device. The camera apparatus includes a bearing member, a first drive assembly, a camera module, a rotating member, and a lifting member. The first drive assembly is mounted on the bearing member, the rotating member is rotatably disposed on the bearing member, the rotating member fits the lifting member, and the rotating member is configured to drive the lifting member to ascend or descend. The first drive assembly fits the rotating member, the first drive assembly drives the rotating member to rotate, and the rotating member is configured to drive the lifting member to ascend or descend during rotation. The camera module includes a camera and a second drive assembly, the second drive assembly is connected to the camera, and the second drive assembly is configured to drive the camera to ascend or descend. The ascending and descending of the camera are controlled by the second drive assembly, the lifting member does not control the ascending and descending of the camera, and the lifting member is decoupled from the camera. This can avoid impact of the lifting member on lifting precision of the camera, reduce structural components affecting the lifting precision of the camera, and improve controllability of the lifting precision of the camera, to ensure image shooting performance of the camera apparatus.

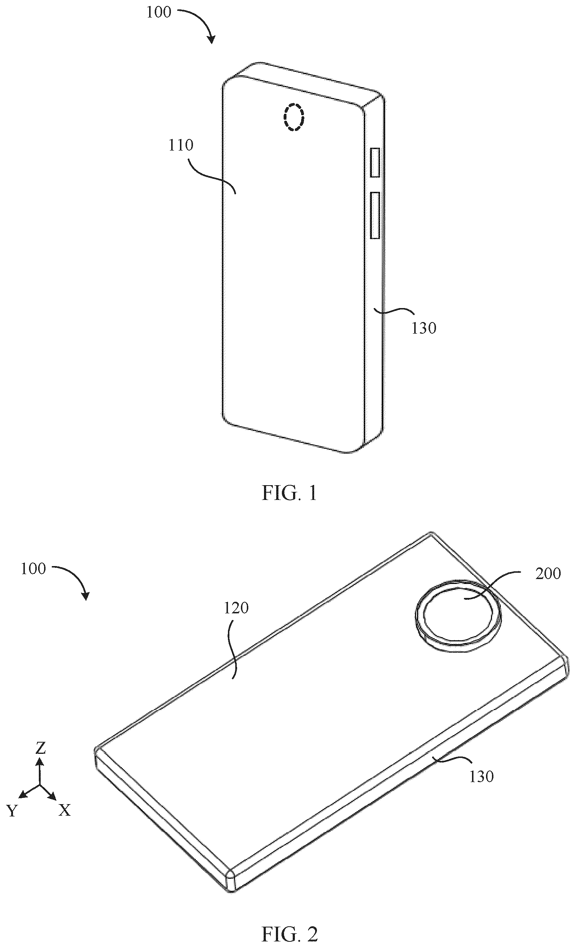

The following describes, with reference to FIG. 1 to FIG. 33, an electronic device 100 provided in embodiments of this application.

Embodiments of this application provide the electronic device 100. The electronic device 100 may include but is not limited to a mobile terminal or a fixed terminal having a camera apparatus 200, for example, a mobile phone, a tablet computer, a notebook computer, an ultra-mobile personal computer (ultra-mobile personal computer, UMPC), a handheld computer, an intercom, a netbook, a POS terminal, a personal digital assistant (personal digital assistant, PDA), a driving recorder, or a security and protection device.

In embodiments of this application, refer to FIG. 1 and FIG. 2. An example in which the electronic device 100 is the mobile phone is used for description. The mobile phone may be a foldable mobile phone. The foldable mobile phone may be an inward foldable mobile phone (that is, a display 110 folds inward), or may be an outward foldable mobile phone (that is, a display 110 folds outward). Alternatively, the mobile phone may be a bar phone.

In embodiments of this application, the bar phone is used as an example.

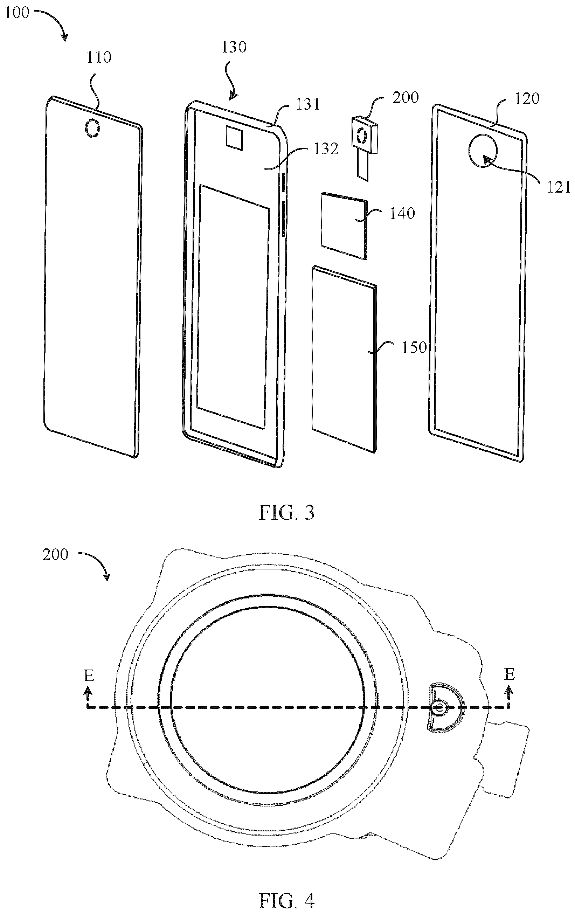

Refer to FIG. 3. The mobile phone may include a display 110, a rear cover 120, and a middle frame 130, a main circuit board 140, and a battery 150 that are located between the display 110 and the rear cover 120. The main circuit board 140 and the battery 150 may be disposed on the middle frame 130. For example, the main circuit board 140 and the battery 150 are disposed on a surface that is of the middle frame 130 and that faces the rear cover 120, or the main circuit board 140 and the battery 150 may be disposed on a surface that is of the middle frame 130 and that faces the display 110. When the main circuit board 140 is disposed on the middle frame 130, the middle frame 130 may be provided with an opening for placing a component on the main circuit board 140 in the opening of the middle frame 130.

The battery 150 may be connected to a charging management module and the main circuit board 140 through a power management module. The power management module receives an input of the battery 150 and/or an input of the charging management module, and supplies power to a processor, an internal memory, an external memory, the display 110, a communication module, and the like. The power management module may further be configured to monitor parameters such as a capacity of the battery 150, a cycle count of the battery 150, and a health status (electric leakage or impedance) of the battery 150. In some other embodiments, the power management module may be alternatively disposed in a processor of the main circuit board 140. In some other embodiments, the power management module and the charging management module may be alternatively disposed in a same device.

The display 110 may be an organic light-emitting diode (Organic Light-Emitting Diode, OLED) display, or may be a liquid crystal display (Liquid Crystal Display, LCD).

The rear cover 120 may be a metal rear cover, or may be a glass rear cover, or may be a plastic rear cover, or may be a ceramic rear cover. A material of the rear cover 120 is not limited in embodiments of this application.

Still refer to FIG. 3. The middle frame 130 may include a middle plate 132 and a side frame 131. The side frame 131 may be disposed around a periphery of the middle plate 132. The side frame 131 may include a top side frame, a bottom side frame, a left side frame, and a right side frame, and the top side frame, the bottom side frame, the left side frame, and the right side frame enclose the annular side frame 131. A material of the middle plate 132 may be aluminum, or may be an aluminum alloy, or may be a magnesium alloy. The material of the middle plate 132 is not limited. The side frame 131 may be a metal side frame, or may be a ceramic side frame. A material of the side frame 131 is not limited. The middle plate 132 and the side frame 131 may be clamped, welded, bonded, or integrally formed, or the middle plate 132 and the side frame 131 are fastened through injection molding.

It should be noted that in some other examples, the mobile phone may include but is not limited to the structure shown in FIG. 3. For example, the mobile phone may include the display 110, the middle plate 132, and a housing, and the housing may include the side frame 131 and the rear cover 120. For example, the housing may be a housing integrally formed by the side frame 131 and the rear cover 120. Both the main circuit board 140 and the battery 150 may be located in an accommodation space enclosed by the display 110 and the housing.

The mobile phone may further include the camera apparatus 200 and a flash (not shown in the figure), to implement an image shooting function. At least a part of the camera apparatus 200 may be located in the accommodation space enclosed by the display 110 and the housing. The camera apparatus 200 may include a front-facing camera apparatus and a rear-facing camera apparatus. The rear-facing camera apparatus and the flash may be disposed on the surface that is of the middle plate 132 and that faces the rear cover 120, and a mounting hole 121 for mounting the rear-facing camera apparatus is provided in the rear cover 120. The front-facing camera apparatus may be disposed on the surface that is of the middle plate 132 and that faces the display 110. In embodiments of this application, disposing positions of the front-facing camera apparatus and the rear-facing camera apparatus include but are not limited to the foregoing descriptions. In some embodiments, one or N front-facing camera apparatuses and one or N rear-facing camera apparatuses may be disposed in the mobile phone, where N is a positive integer greater than 1.

It may be understood that the structures shown in embodiments of this application do not constitute specific limitations on the electronic device 100. In some other embodiments of this application, the electronic device 100 may include more or fewer components than those shown in the figure, or some components may be combined, or some components may be split, or different component arrangements may be used. The components shown in figure may be implemented by hardware, software, or a combination of software and hardware.

Based on the foregoing descriptions, in embodiments of this application, a scenario in which the rear-facing camera apparatus is disposed in the mobile phone is used as an example for description. In some other examples, the rear-facing camera apparatus may alternatively serve as the front-facing camera apparatus for use.

As shown in FIG. 2 and FIG. 3, the rear cover 120, the side frame 131, and the display 110 enclose the accommodation space, and at least a part of the camera apparatus 200 is located in the accommodation space, to reduce a size of the camera apparatus 200 protruding from the mobile phone, and reduce impact of the camera apparatus 200 on the appearance of the mobile phone. For example, the camera apparatus 200 may be partially located in the accommodation space, or the camera apparatus 200 may be completely located in the accommodation space.

The mounting hole 121 is provided in the rear cover 120, and the mounting hole 121 may be located at an edge position of the rear cover 120 or at a middle position of the rear cover 120. In some other examples, the mounting hole 121 may be further located on any side of the side frame 131 or at a corner of the side frame 131.

The following describes in detail the camera apparatus 200 provided in embodiments of this application.

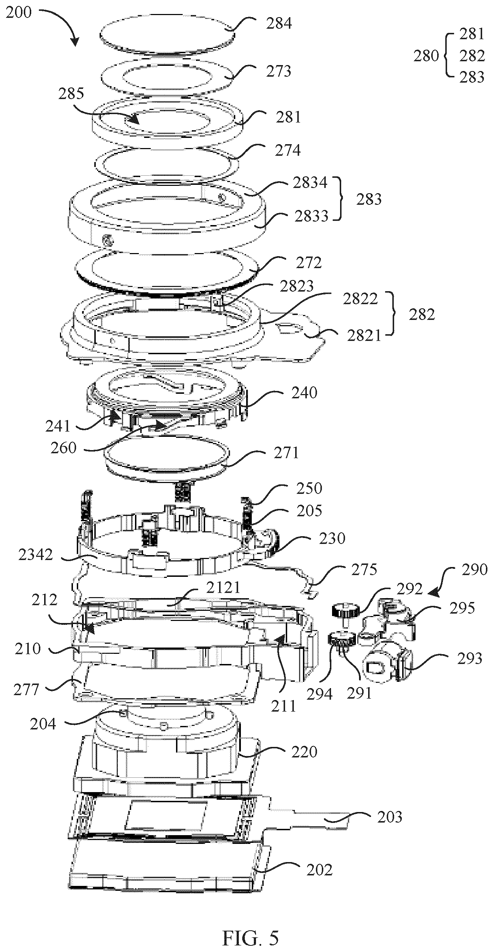

As shown in FIG. 4 and FIG. 5, the camera apparatus 200 may include a bearing member 210, a first drive assembly 290, a rotating member 230, and a lifting member 240. The bearing member 210 may be configured to: bear another structural component, and protect the another structural component, to facilitate overall mechanical strength of the camera apparatus 200.

The first drive assembly 290 is mounted on the bearing member 210, and the rotating member 230 is rotatably disposed on the bearing member 210. The first drive assembly 290 fits the rotating member 230, and the rotating member 230 is configured to drive the lifting member 240 to ascend or descend during rotation. The first drive assembly 290 is configured to: drive the rotating member 230 to rotate, and drive, through the rotating member 230, the lifting member 240 to ascend or descend.

The camera apparatus 200 includes a camera module 220. The camera module 220 includes a camera and a second drive assembly. The second drive assembly is connected to the camera. The second drive assembly is configured to drive the camera to ascend or descend.
In addition, the second drive assembly may be further configured to adjust a focal length.

For example, still refer to FIG. 5. An accommodation groove is provided on a side of the bearing member 210, the accommodation groove may include a first accommodation groove 211, and the first accommodation groove 211 is used to accommodate the first drive assembly 290, to limit and protect the first drive assembly 290. The accommodation groove may include a second accommodation groove 212, and the second accommodation groove 212 is used to accommodate the rotating member 230, to limit and protect the rotating member 230.

At least a part of an inner wall surface of the second accommodation groove 212 is a first arc surface 2121, and at least a part of an outer wall surface of the rotating member 230 is a second arc surface 2342. The first arc surface 2121 fits the second arc surface 2342, so that the rotating member 230 rotates and moves along the inner wall surface of the second accommodation groove 212 under the action of a first drive member 293. There may be a plurality of first arc surfaces 2121, and the plurality of first arc surfaces 2121 are spaced apart and are in a one-to-one correspondence with the second arc surfaces 2342.

The rotating member 230 and the lifting member 240 are approximately tubular, and an accommodation area is provided on an inner side of the rotating member 230 and the lifting member 240. The camera is located in the accommodation area, and ascends and descends in the accommodation area. In this way, a size occupied by the camera can be reduced, and the camera can also be protected.

When the first drive assembly 290 drives the rotating member 230 to rotate (in a first rotation direction), and the rotating member 230 drives the lifting member 240 to ascend, a distance between the lifting member 240 and the bearing member 210 is increased, so that the accommodation area is expanded. The camera ascends under the action of the second drive assembly. When the first drive assembly 290 drives the rotating member 230 to rotate (in a second rotation direction), and the rotating member 230 drives the lifting member 240 to descend, the distance between the lifting member 240 and the bearing member 210 is reduced, so that the accommodation area is reduced. The camera descends under the action of the second driving assembly. This process is repeated to implement ascending and descending of the camera.

Because the ascending and descending of the camera are controlled by the second drive assembly, and the lifting member 240 does not control the ascending and descending of the camera, the lifting member 240 is decoupled from the camera. This can avoid impact of the lifting member 240 on the lifting precision of the camera, reduce structural components affecting the lifting precision of the camera, and improve controllability of the lifting precision of the camera, to ensure image shooting performance of the camera apparatus 200.

Specifically, the camera may include a camera lens, the camera lens may include a lens barrel and a plurality of lenses located in the lens barrel, and the lenses may be a plastic (Plastic) lens and a glass (Glass) lens.

The camera lens may include a 5P camera lens (five lenses), a 6P camera lens (six lenses), or the like based on a quantity of lenses. For example, the 5P camera lens may be five plastic lenses, or may be four plastic lenses and one glass lens; and the 6P camera lens may be six plastic lenses, or may be five plastic lenses and one glass lens. It should be noted that a quantity of lenses in the camera lens is not limited to 5 or 6, and may be any quantity greater than or equal to 2.

It should be noted that, as shown in FIG. 2, the mobile phone may include a first direction X, where the first direction X may be a width direction of the mobile phone; the mobile phone may include a second direction Y, where the second direction Y may be a length direction of the mobile phone; and the mobile phone may include a third direction Z, where the third direction Z may be a thickness direction of the mobile phone. A direction of the mobile phone may be consistent with directions of the camera apparatus 200, the first drive assembly 290, the camera module 220, and the like.

Lifting directions of the camera and the lifting member 240 may include but are not limited to the first direction X (an X direction), the second direction Y (a Y direction), or the third direction Z (a Z direction). In embodiments of this application, an example in which the lifting directions of the camera and the lifting member 240 are the Z direction is used for description.

The first drive assembly 290 and the camera module 220 may be at least partially located on a side that is of the bearing member 210 and that faces the rotating member 230, so that the first drive assembly 290 and the camera module 220 may have an overlapping portion in a thickness direction, to reduce an overall thickness of the camera apparatus 200. The camera module 220 may be partially or completely located on the side that is of the bearing member 210 and that faces the rotating member 230.

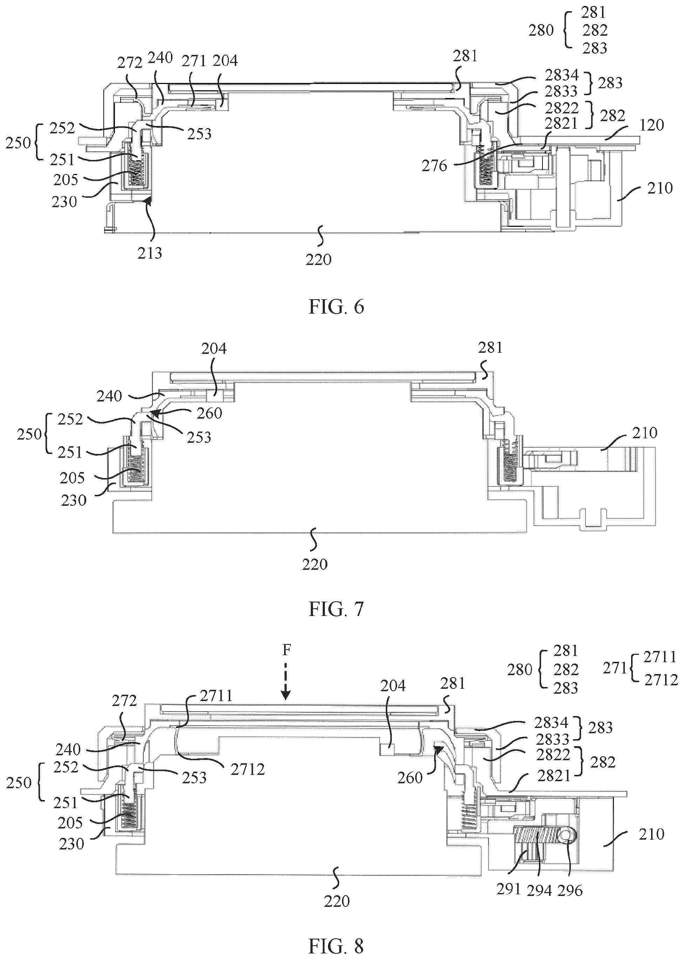

As shown in FIG. 6, a hollow area 213 is provided on the bearing member 210, the camera module 220 penetrates into the hollow area 213, and a part of the camera module 220 is located on the side that is of the bearing member 210 and that faces the rotating member 230. The part of the camera module 220 located on the side that is of the bearing member 210 and that faces the rotating member 230 passes through the rotating member 230, and may include the camera, the second drive assembly, and the like. The other part of the camera module 220 is located on a side that is of the bearing member 210 and that is away from the rotating member 230, and may include an optical image stabilization structure. The optical image stabilization structure occupies a large area on an XY plane, so that disposing the optical image stabilization structure on the side that is of the bearing member 210 and that is away from the rotating member 230 can avoid impact of the optical image stabilization structure on a size of the rotating member 230 to reduce the size of the rotating member 230, and facilitate miniaturization of the camera apparatus 200.

As shown in FIG. 5, a bottom protection member 202 and a sub-circuit board 203 may be disposed on a side that is of the camera module 220 and that is away from the lifting member 240. The sub-circuit board 203 is located between the bottom protection member 202 and the camera module 220. The first drive assembly 290 and/or the camera module 220 are/is electrically connected to the sub-circuit board 203. The bottom protection member 202 protects the sub-circuit board 203.

The sub-circuit board 203 may be a flexible circuit board (Flexible Printed Circuit, FPC), and may be electrically connected to a photosensitive element. For example, the photosensitive element may be a charge coupled device (charge coupled device, CCD) or a complementary metal-oxide-semiconductor (complementary metal-oxide-semiconductor, CMOS) phototransistor.

The following describes a status of the camera apparatus 200 provided in embodiments of this application.

As shown in FIG. 6 and FIG. 7, the camera apparatus 200 may include a retracting state, where the retracting state is that the camera and the lifting member 240 do not extend from the camera apparatus 200. In this case, the thickness of the camera apparatus 200 is small, an overall thickness of the electronic device 100 is small, and impact of the camera apparatus 200 on an appearance of the electronic device 100 is small.

As shown in FIG. 8 to FIG. 10, the camera apparatus 200 may include an extending state, where the extending state is that the camera and the lifting member 240 move toward a direction away from the bearing member 210. For example, the camera and the lifting member 240 extend out in a direction of the rear cover 120 away from the display 110. In this case, the thickness of the camera apparatus 200 is increased, and an available optical space of the camera apparatus 200 is large, so that good image shooting quality can be obtained. The thickness of the camera apparatus 200 is no longer limited by the thickness of the electronic device 100, and the thickness of the electronic device 100 may be set to a small value, which facilitates lightness and thinness of the electronic device 100.

Certainly, the camera apparatus 200 may alternatively be in an intermediate state between the extending state and the retracting state. When the camera apparatus 200 is in the extending state, the retracting state, or the intermediate state, the lifting member 240 and the camera may also be in a same state.

As shown in FIG. 6, the camera apparatus 200 may include a protective cover 280, where the protective cover 280 is located outside structural components such as the lifting member 240, the rotating member 230, and the camera module 220, to protect each structural component.

The protective cover 280 may include an inner protective cover 282. The inner protective cover 282 may include a first extension part 2821 and a second extension part 2822 that are connected. The first extension part 2821 is located on a side that is of the second extension part 2822 and that faces the bearing member 210. The first extension part 2821 extends along a plane (the XY plane) on which the bearing member 210 is located, and the second extension part 2822 extends in a thickness direction (the Z direction) of the camera apparatus 200. The first extension part 2821 is connected to an edge on a side that is of the bearing member 210 and that faces the lifting member 240, and the second extension part 2822 is sleeved on an outer side of the lifting member 240. The lifting member 240, the rotating member 230, and a part of the camera module 220 are all located in an accommodation area enclosed by the inner protective cover 282 and the bearing member 210. The inner protective cover 282 protects a structural component located on an inner side of the inner protective cover 282. The inner protective cover 282 is a static member and does not undergo a lifting motion.

As shown in FIG. 6, the protective cover 280 may include an outer protective cover 283. The outer protective cover 283 may include a third extension part 2833 and a fourth extension part 2834 that are connected. The third extension part 2833 is located on a side that is of the fourth extension part 2834 and that faces the bearing member 210. The third extension part 2833 extends in the thickness direction of the camera apparatus 200, and the fourth extension part 2834 extends along the plane (the XY plane) on which the bearing member 210 is located. The third extension part 2833 is sleeved on an outer side of the second extension part 2822, and the fourth extension part 2834 is located on a side that is of the second extension part 2822 and that is away from the bearing member 210. The outer protective cover 283 may protect a structural component located on an inner side of the outer protective cover 283. The outer protective cover 283 may be connected to the inner protective cover 282, and the outer protective cover 283 is a static member and does not undergo a lifting motion. In some embodiments, the outer protective cover 283 and the rear cover 120 may be of an integrated structure.

As shown in FIG. 6, the protective cover 280 may include a top protective cover 281. The top protective cover 281 is connected to a side that is of the lifting member 240 and that is away from the bearing member 210. The top protective cover 281 is a moving member, and the top protective cover 281 ascends and descends along with the lifting member 240. When an external force acts on the camera apparatus 200, the external force first acts on the top protective cover 281. The top protective cover 281 may protect a structural component located on an inner side of the top protective cover 281. In the thickness direction of the camera apparatus 200, there is a spacing between the top protective cover 281 and the camera module 220. When the external force acts on the top protective cover 281, there is a cushioning space between the top protective cover 281 and the camera module 220. The top protective cover 281 can come into contact with the camera module 220 only after moving toward the bearing member 210 for a specific distance, to prevent the external force from directly acting on the camera module 220 through the top protective cover 281, and protect the camera module 220.

As shown in FIG. 5, a light-transmitting hole 285 may be provided in a central area of the top protective cover 281, a light-transmitting member 284 covers the light-transmitting hole 285, and the camera lens and the light-transmitting member 284 are disposed opposite to each other in the Z direction. In this way, during image shooting, external light rays may enter the camera lens through the light-transmitting member 284. The light-transmitting member 284 may be connected to the top protective cover 281 in a manner of clamping, bonding, or the like.

In some embodiments, in the thickness direction of the camera apparatus 200, the rotating member 230 and the lifting member 240 have an overlapping area, so that an overall thickness of the rotating member 230 and the lifting member 240 is small. For example, the rotating member 230 and the lifting member 240 may be at least partially sleeved with each other, where at least a part of the lifting member 240 may be sleeved on the outside of at least a part of the rotating member 230; or at least a part of the rotating member 230 may be sleeved on the outside of at least a part of the lifting member 240. Alternatively, in the thickness direction of the camera apparatus 200, the rotating member 230 and the lifting member 240 may be spaced apart, to avoid mutual interference between the rotating member 230 and the lifting member 240 during assembly.

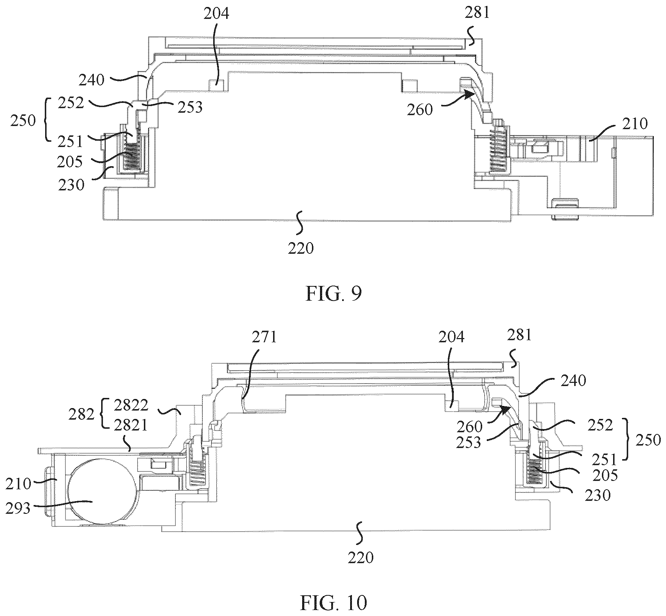

As shown in FIG. 10, the camera apparatus 200 may include a guide member 250. The guide member 250 includes a first end 251 and a second end 252 that are disposed opposite to each other in the thickness direction of the camera apparatus 200. An inclined guide channel 260 is disposed on one of the rotating member 230 and the lifting member 240, the other of the rotating member 230 and the lifting member 240 is connected to the first end 251 of the guide member 250, a bump 253 that fits the guide channel 260 is disposed on the second end 252 of the guide member 250, and the bump 253 is inserted into the guide channel 260 and moves in an extension direction of the guide channel 260.

The following describes the guide channel 260 and the guide member 250 that are provided in embodiments of this application.

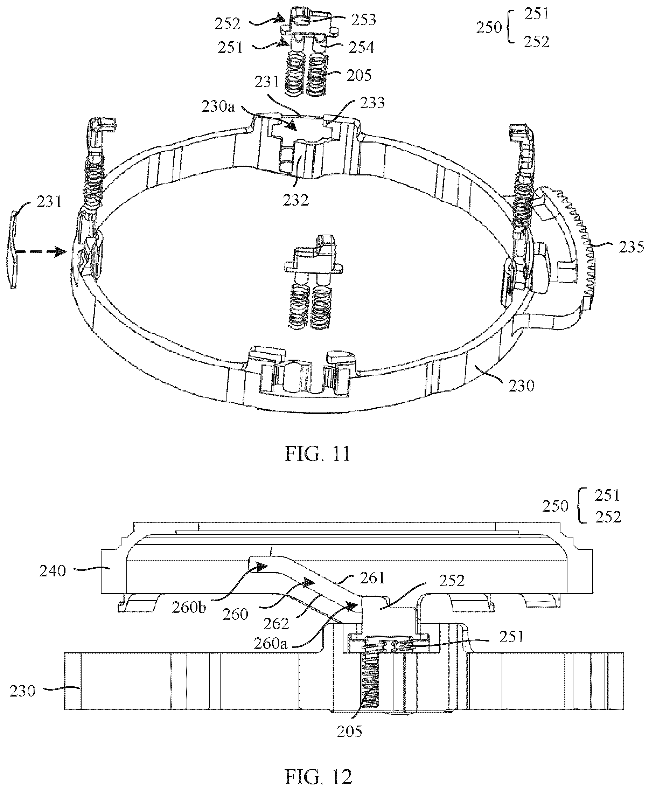

In a first implementation, as shown in FIG. 11 and FIG. 12, the guide channel 260 may be disposed on the lifting member 240, the first end 251 of the guide member 250 is connected to the rotating member 230, and the bump 253 of the second end 252 of the guide member 250 is inserted into the guide channel 260 of the lifting member 240 and moves in the extension direction of the guide channel 260. The first drive assembly 290 drives the rotating member 230 to rotate, the rotating member 230 drives the guide member 250 to rotate, and the guide member 250 and the guide channel 260 move mutually during rotation. Because the guide channel 260 is disposed in an inclined manner, one end that is of the guide channel 260 and that faces the bearing member 210 is close to the bearing member 210, and one end that is of the guide channel 260 and that is away from the bearing member 210 is far away from the bearing member 210. When the bump 253 is located at the end that is of the guide channel 260 and that faces the bearing member 210, the lifting member 240 is in the extending state. When the bump 253 is located at the end that is of the guide channel 260 and that is away from the bearing member 210, the lifting member 240 is in the retracting state.

For example, the guide channel 260 may pass through the outer wall surface and the inner wall surface of the lifting member 240 in a radial direction of the lifting member 240, or the guide channel 260 may be formed by a groove provided on the outer wall surface or the inner wall surface of the lifting member 240.

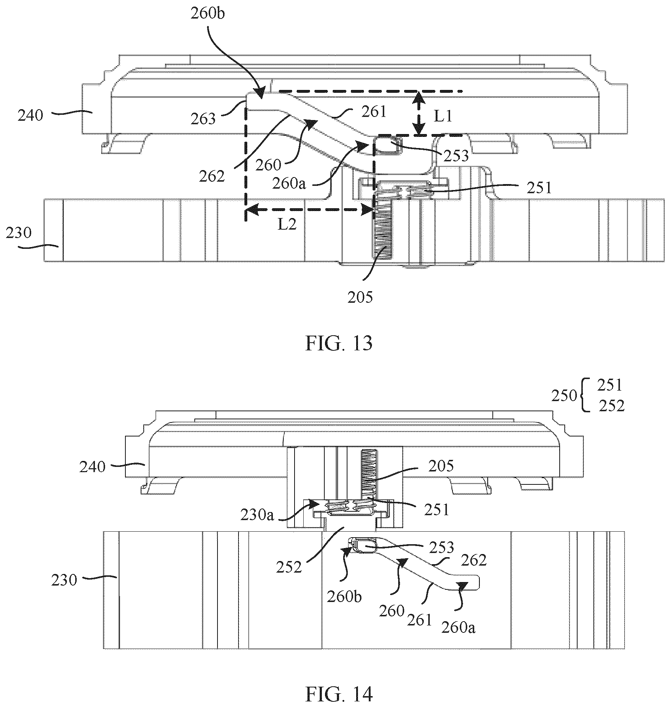

As shown in FIG. 12, the second end 252 may be located on an inner side of the lifting member 240, and the bump 253 is inserted into the guide channel 260 from the inner side of the lifting member 240. Alternatively, as shown in FIG. 13, the second end 252 may be located on an outer side of the lifting member 240, and the bump 253 is inserted into the guide channel 260 from the outer side of the lifting member 240.

In some examples, the guide member 250 may be fastened to the rotating member 230, so that stability of the connection between the guide member 250 and the rotating member 230 is high. For example, the guide member 250 and the rotating member 230 may be fastened in a manner of bonding, welding, integral forming, or the like. In some other examples, as shown in FIG. 13, a cushioning member 205 may be disposed on the rotating member 230, the first end 251 is connected to the cushioning member 205, the guide member 250 is connected to the rotating member 230 by using the cushioning member 205, and the cushioning member 205 is configured to implement a cushioning function when the lifting member 240 moves toward the bearing member 210.

As shown in FIG. 8, when the camera apparatus 200 is subject to an external force F, the external force F first acts on the top protective cover 281, the top protective cover 281 moves downward, and the camera also moves downward (the downward movement of the camera is described in a subsequent embodiment). The top protective cover 281 transfers the external force F to the lifting member 240, the guide member 250, the cushioning member 205, and the rotating member 230 in sequence, to cushion the external force F by using the cushioning member 205.

The cushioning member 205 may be an elastic cushioning member. The cushioning member 205 may be made of an elastic material like rubber, foam, sponge, or latex. In addition, the cushioning member 205 may be an elastomer, a spring, or the like.

Specifically, as shown in FIG. 8, when the camera apparatus 200 is subject to the external force F, the external force F first acts on the top protective cover 281, the top protective cover 281 moves downward, the top protective cover 281 transfers the external force F to the lifting member 240, the guide member 250, and the cushioning member 205 in sequence, and the cushioning member 205 is compressed, so that the external force F is cushioned by using the cushioning member 205.

For example, an elastic cushioning member may always be in a compressed state. As long as the camera module 220 is subject to an external force in the Z direction, the cushioning member 205 may implement a cushioning function, to implement full-process cushioning. In this way, a protection effect on the camera module 220 is good.

As shown in FIG. 11, a mounting area 230a is disposed on the rotating member 230. The mounting area 230a is configured to: accommodate the cushioning member 205, limit the cushioning member 205, and guide a deformation direction of the cushioning member 205. For example, a first limiting member 231 is disposed on a side that is of the mounting area 230a and that faces the outer wall surface of the rotating member 230, and the first limiting member 231 is detachably connected to the rotating member 230. In addition, a second limiting member 232 is disposed on a side that is of the mounting area 230a and that faces an inner wall surface of the rotating member 230, and the second limiting member 232 is detachably connected to the rotating member 230. A third limiting member 233 is disposed on a side that is of the mounting area 230a and that is away from the bearing member 210, and the third limiting member 233 is located on a side that is of the guide member 250 and that is away from the bearing member 210, so that the guide member 250 and the rotating member 230 can be prevented from being separated in the Z direction.

At least one of the first limiting member 231, the second limiting member 232, and the third limiting member 233 is detachably connected to the rotating member 230. For example, the first limiting member 231 is detachably connected to the rotating member 230. When the first limiting member 231 is not mounted on the rotating member 230, there is a large opening on the side that is of the mounting area 230a and that faces the outer wall surface of the rotating member 230, so that the cushioning member 205 and the guide member 250 are placed in the mounting area 230a. After the cushioning member 205 and the guide member 250 are placed in the mounting area 230a, the first limiting member 231 is mounted on the rotating member 230, to limit the cushioning member 205 and the guide member 250. In an implementation in which the second limiting member 232 is detachably connected to the rotating member 230, a principle of the second limiting member 232 is similar to that of the first limiting member 231. Details are not described again.

In a second implementation, as shown in FIG. 14, the guide channel 260 may be disposed on the rotating member 230, the first end 251 of the guide member 250 is connected to the lifting member 240, and the bump 253 of the second end 252 of the guide member 250 is inserted into the guide channel 260 of the rotating member 230 and moves in the extension direction of the guide channel 260. The first drive assembly 290 drives the rotating member 230 to rotate, the rotating member 230 drives the guide channel 260 to rotate, and the guide channel 260 and the guide member 250 move mutually during rotation. Because the guide channel 260 is disposed in an inclined manner, one end that is of the guide channel 260 and that faces the bearing member 210 is close to the bearing member 210, and one end that is of the guide channel 260 and that is away from the bearing member 210 is far away from the bearing member 210. When the bump 253 is located at the end that is of the guide channel 260 and that faces the bearing member 210, the lifting member 240 is in the retracting state. When the bump 253 is located at the end that is of the guide channel 260 and that is away from the bearing member 210, the lifting member 240 is in the extending state.

The guide channel 260 may pass through the outer wall surface and the inner wall surface of the rotating member 230 in a radial direction of the rotating member 230, or the guide channel 260 may be formed by a groove disposed on the outer wall surface or the inner wall surface of the rotating member 230. The second end 252 may be located on an inner side of the rotating member 230, and the bump 253 is inserted into the guide channel 260 from the inner side of the rotating member 230. Alternatively, the second end 252 may be located on an outer side of the rotating member 230, and the bump 253 is inserted into the guide channel 260 from the outer side of the rotating member 230.

In some examples, the guide member 250 may be fastened to the lifting member 240, so that stability of the connection between the guide member 250 and the lifting member 240 is high. For example, the guide member 250 and the lifting member 240 may be fastened in a manner of bonding, welding, integral forming, or the like. In some other examples, a cushioning member 205 may be disposed on the lifting member 240, the first end 251 is connected to the cushioning member 205, the guide member 250 is connected to the lifting member 240 by using the cushioning member 205, and the cushioning member 205 is configured to implement a cushioning function when the lifting member 240 moves toward the bearing member 210.

Specifically, when the camera apparatus 200 is subject to an external force, the external force first acts on the top protective cover 281, the top protective cover 281 moves downward, and the top protective cover 281 transfers the external force to the lifting member 240, the cushioning member 205, the guide member 250, and the rotating member 230 in sequence. In a process of transferring the external force, the cushioning member 205 is compressed, so that the external force is cushioned by using the cushioning member 205.

As shown in FIG. 14, a mounting area 230a may be disposed on the lifting member 240. The mounting area 230a is configured to: accommodate the cushioning member 205, limit the cushioning member 205, and guide a deformation direction of the cushioning member 205. For example, a first limiting member 231 is disposed on a side that is of the mounting area 230a and that faces the outer wall surface of the lifting member 240, a second limiting member 232 is disposed on a side that is of the mounting area 230a and that faces the inner wall surface of the lifting member 240, and a third limiting member 233 is disposed on a side that is of the mounting area 230a and that faces the bearing member 210. At least one of the first limiting member 231, the second limiting member 232, and the third limiting member 233 is detachably connected to the lifting member 240, and a principle in this implementation is similar to a principle when the mounting area 230a is located on the rotating member 230. Details are not described again.

It should be noted that one guide member 250 may correspond to at least one cushioning member 205. For example, as shown in FIG. 11, the first end 251 of the guide member 250 may include an insertion part 254, where one insertion part 254 is inserted into one cushioning member 205. There may be one, two, three, or more insertion parts 254. Correspondingly, one, two, three, or more corresponding cushioning members 205 may also be disposed. When there are a plurality of cushioning members 205, a cushioning effect is good.

The following describes the guide channel 260 provided in embodiments of this application.

As shown in FIG. 13, a first channel 260a is disposed at the end that is of the guide channel 260 and that faces the bearing member 210, a second channel 260b is disposed at the end that is of the guide channel 260 and that is away from the bearing member 210, the first channel 260a and the second channel 260b extend along the XY plane, and inner wall surfaces of the first channel 260a and the second channel 260b may be parallel to the XY plane, so that a contact area of the bump 253 with the inner wall surface of the first channel 260a or the second channel 260b is large. When the bump 253 is located in the first channel 260a or the second channel 260b, an effect of mutual support between the bump 253 and the inner wall surface of the first channel 260a or the second channel 260b is good. The bump 253 may be stably located in the first channel 260a or the second channel 260b, to prevent the lifting member 240 from sliding along the guide channel 260, so that the lifting member 240 can be stably in the extending state or the retracting state, and the camera apparatus 200 can be prevented from shaking, to ensure an image shooting effect of the camera apparatus 200.

It should be noted that, when the bump 253 moves in the guide channel 260, the lifting member 240 switches between the extending state and the retracting state. As shown in FIG. 13, in the implementation in which the guide channel 260 is located on the lifting member 240, when the bump 253 is located on the first channel 260a, the lifting member 240 is in the extending state; or when the bump 253 is located on the second channel 260b, the lifting member 240 is in the retracting state. As shown in FIG. 14, in the implementation in which the guide channel 260 is located on the rotating member 230, when the bump 253 is located on the first channel 260a, the lifting member 240 is in the retracting state; or when the bump 253 is located on the second channel 260b, the lifting member 240 is in the extending state.

For example, an end face of the bump 253 in an axial direction of the rotating member 230 is of a planar structure, and two ends of the planar structure are curved surfaces. In this way, the bump 253 can smoothly fit the guide channel 260, and abrasion and scratching of the bump 253 on the guide channel 260 can be avoided, thereby preventing lifting of the bump 253 from being stuck, and prolonging service lives of the bump 253 and the guide channel 260. Certainly, the bump 253 may alternatively be of a structure in another shape. For example, the end face of the bump 253 in the axial direction of the rotating member 230 is an arc surface structure. This is not limited in embodiments of this application.

As shown in FIG. 13, a spacing between the first channel 260a and the second channel 260b in an axial direction of the lifting member 240 is a first spacing L1, and the first spacing L1 is a distance for which the lifting member 240 can ascend or descend in the Z direction. A distance between the first channel 260a and the second channel 260b in a circumferential direction of the lifting member 240 is a second spacing L2. When the rotating member 230 drives the bump 253 to move in the circumferential direction of the lifting member 240 in the guide channel 260 for a distance equal to the second spacing L2, the lifting member 240 can ascend or descend in the Z direction for the first spacing L1. In addition, a tooth structure 235 (shown in FIG. 11) is disposed on the outer side of the rotating member 230, and the tooth structure 235 is disposed at one end that is of the rotating member 230 and that is close to the bearing member 210, to be meshed with the first drive assembly 290. A length of the rotating member 230 covered by the tooth structure 235 in a circumferential direction of the rotating member 230 is greater than or equal to the second spacing L2.

In the circumferential direction of the lifting member 240, a baffle wall 263 is disposed on both an end that is of the first channel 260a and that is away from the second channel 260b and an end that is of the second channel 260b and that is away from the first channel 260a; and the baffle wall 263 is configured to limit the bump 253 in the guide channel 260.

For example, the bump 253 may include an upper end face and a lower end face that are spaced apart in the axial direction of the lifting member 240, the lower end face is located on a side that is of the bump 253 and that faces the bearing member 210, and the upper end face is located on a side that is of the bump 253 and that is away from the bearing member 210.

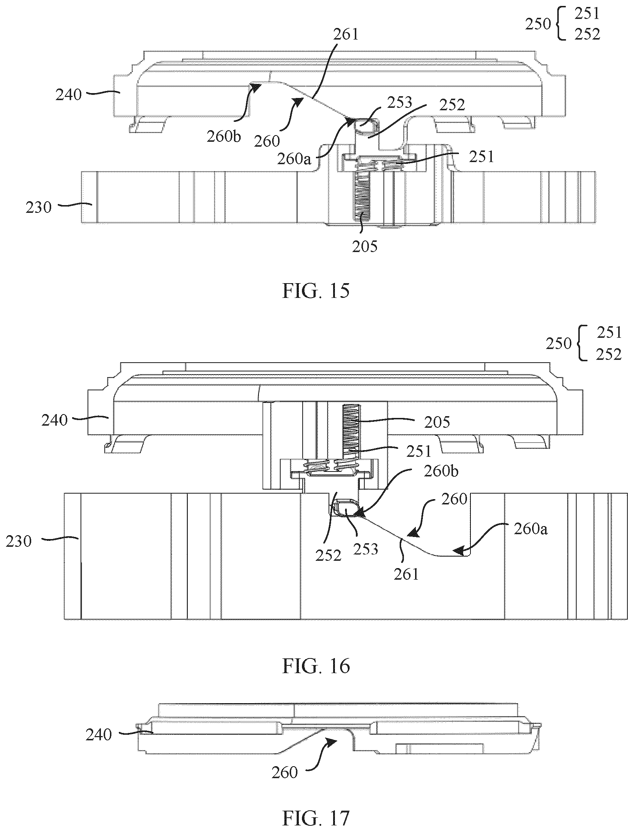

In some embodiments, as shown in FIG. 15 to FIG. 17, the guide channel 260 may include a first inner wall surface 261, and the first inner wall surface 261 is located on a side that is of the bump 253 and that is away from the first end 251.

In the implementation in which the guide channel 260 is located on the lifting member 240, as shown in FIG. 15 and FIG. 17, the first inner wall surface 261 is disposed opposite to the upper end face of the bump 253. When the guide member 250 drives the bump 253 to move from the second channel 260b to the first channel 260a, the upper end face of the bump 253 abuts against the first inner wall surface 261, and applies an action force away from the bearing member 210 to the first inner wall surface 261, to push the lifting member 240 to ascend. In addition, when the bump 253 is static, the upper end face of the bump 253 supports the first inner wall surface 261, to support the lifting member 240.

In the implementation in which the guide channel 260 is located on the rotating member 230, as shown in FIG. 16, the first inner wall surface 261 is disposed opposite to the lower end face of the bump 253. When the rotating member 230 drives the guide channel 260 to move in a direction from the second channel 260b to the first channel 260a, the first inner wall surface 261 abuts against the lower end face of the bump 253, and applies an action force away from the bearing member 210 to the lower end face of the bump 253, to push the guide member 250 to ascend, and then the guide member 250 drives the lifting member 240 to ascend. In addition, when the bump 253 is static, the first inner wall surface 261 supports the lower end face of the bump 253, to support the guide member 250 and the lifting member 240.

In some embodiments, as shown in FIG. 13 and FIG. 14, the guide channel 260 may include a second inner wall surface 262 spaced apart from the first inner wall surface 261, and the second inner wall surface 262 is located on a side that is of the bump 253 and that faces the first end 251.

In the implementation in which the guide channel 260 is located on the lifting member 240, as shown in FIG. 13, the second inner wall surface 262 is disposed opposite to the lower end face of the bump 253. When the guide member 250 drives the bump 253 to move from the first channel 260a to the second channel 260b, the lower end face of the bump 253 abuts against the second inner wall surface 262, and applies an action force toward the bearing member 210 to the second inner wall surface 262, to push the lifting member 240 to descend.

In the implementation in which the guide channel 260 is located on the rotating member 230, as shown in FIG. 14, the second inner wall surface 262 is disposed opposite to the upper end face of the bump 253. When the rotating member 230 drives the guide channel 260 to move in a direction from the first channel 260a to the second channel 260b, the second inner wall surface 262 abuts against the upper end face of the bump 253, and applies an action force toward the bearing member 210 to the upper end face of the bump 253, to push the guide member 250 to descend, and then the guide member 250 drives the lifting member 240 to descend.

It should be noted that, as shown in FIG. 13 and FIG. 14, the guide channel 260 may include both the first inner wall surface 261 and the second inner wall surface 262. The lifting member 240 can ascend under interaction between the first inner wall surface 261 and the bump 253, and the lifting member 240 can descend under interaction between the second inner wall surface 262 and the bump 253. Therefore, the lifting member 240 can ascend and descend through the interaction between the bump 253 and both the first inner wall surface 261 and the second inner wall surface 262.

Certainly, as shown in FIG. 15 to FIG. 17, only the first inner wall surface 261 may be disposed on the guide channel 260, and the second inner wall surface 262 is not disposed, so that a structure of the guide channel 260 is simple. The lifting member 240 can ascend under the interaction between the first inner wall surface 261 and the bump 253. However, because the second inner wall surface 262 is not disposed, the lifting member 240 cannot descend through the second inner wall surface 262. The camera apparatus 200 may include an elastic member, and the elastic member is configured to provide an elastic driving force for the lifting member 240, to drive the lifting member 240 to descend.

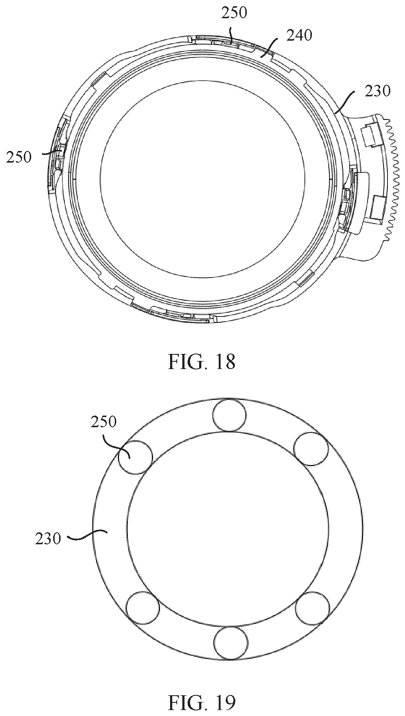

It may be understood that there may be at least one guide channel 260. When there are a plurality of guide channels 260, there may also be a plurality of guide members 250, and the guide members 250 and the guide channels 260 are disposed in a one-to-one correspondence. As shown in FIG. 18 and FIG. 19, the plurality of guide members 250 are spaced apart in the circumferential direction of the rotating member 230. For example, the plurality of guide members 250 may be evenly distributed in the circumferential direction of the rotating member 230. Distances between the plurality of bumps 253 and the bearing member 210 in the Z direction may be the same, so that the lifting member 240 can be uniformly stressed, and can stably ascend or descend. A quantity of guide members 250 may include but is not limited to two, three, four, five, six, or more. The guide members 250 may be distributed in an axisymmetric or centrosymmetric manner, so that the guide members 250 are relatively uniformly stressed. Alternatively, the guide members 250 may be asymmetrically distributed.

The following describes the elastic member provided in embodiments of this application.

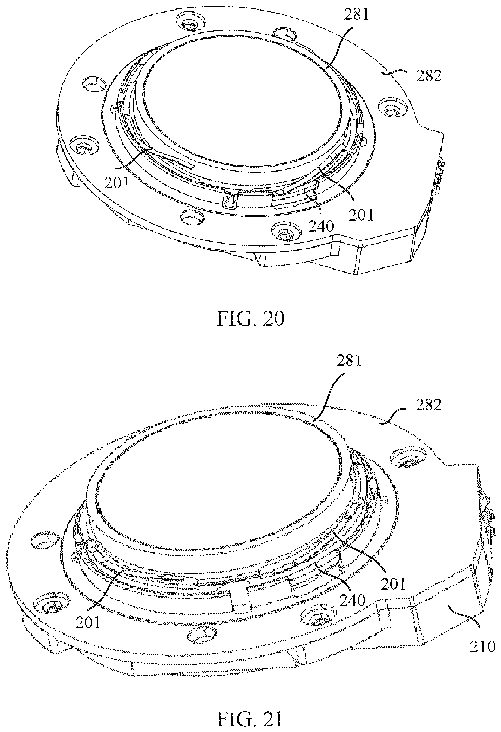

In some embodiments, as shown in FIG. 20 and FIG. 21, the elastic member may include a first elastic member 201, the first elastic member 201 may be an elastic member in a compressed state, and an elastic deformation direction of the first elastic member 201 is in the thickness direction of the camera apparatus 200. The first elastic member 201 is located on the side that is of the lifting member 240 and that is away from the bearing member 210. For example, the first elastic member 201 may be located between the outer protective cover 283 and the lifting member 240. One end of the first elastic member 201 is connected to the outer protective cover 283, that is, one end of the first elastic member 201 may be connected to the side that is of the fourth extension part 2834 (shown in FIG. 8) of the outer protective cover 283 and that faces the bearing member 210, and the other end of the first elastic member 201 is connected to the side that is of the lifting member 240 and that is away from the bearing member 210. The outer protective cover 283 applies a thrust toward the bearing member 210 to the lifting member 240 by using the first elastic member 201.

In the implementation in which the guide channel 260 is located on the lifting member 240, as shown in FIG. 15, when the bump 253 moves from the first channel 260a to the second channel 260b, the upper end face of the bump 253 no longer supports the first inner wall surface 261, that is, the bump 253 no longer supports the lifting member 240. Under the elastic driving force of the first elastic member 201, the lifting member 240 moves toward the bearing member 210, and the lifting member 240 descends. As the bump 253 continuously moves from the first channel 260a to the second channel 260b, the first elastic member 201 continuously drives the lifting member 240 to descend, to implement retraction of the lifting member 240.

In the implementation in which the guide channel 260 is located on the rotating member 230, as shown in FIG. 16, the rotating member 230 moves in a direction from the first channel 260a to the second channel 260b, the first inner wall surface 261 no longer supports the lower end face of the bump 253, and the first inner wall surface 261 no longer supports the guide member 250 and the lifting member 240. Under the elastic driving force of the first elastic member 201, the lifting member 240 moves downward, and the guide member 250 also moves downward. As the rotating member 230 continuously moves in the direction from the first channel 260a to the second channel 260b, the first elastic member 201 continuously drives the lifting member 240 and the guide member 250 to descend, to implement retraction of the lifting member 240.

For example, the first elastic member 201 may be a spring, a dome, or the like. The first elastic member 201 may alternatively be an elastic member made of an elastic material like rubber, foam, sponge, or latex. There may be at least one first elastic member 201. When there are a plurality of first elastic members 201, the first elastic members 201 may be distributed in a spaced manner in the circumferential direction of the lifting member 240, and the first elastic members 201 exert uniform forces on the lifting member 240. For example, a quantity of the first elastic members 201 may include but is not limited to one, two, three, four, five, six, or more.

In some embodiments, the elastic member may include a second elastic member, the second elastic member may be in a stretched state, and an elastic deformation direction of the second elastic member is in the thickness direction of the camera apparatus 200. The second elastic member may be located between the lifting member 240 and the camera module 220, one end of the second elastic member may be connected to the inner wall surface of the lifting member 240, and the other end of the second elastic member may be connected to an outer wall surface of the camera module 220. The camera module 220 applies, by using the second elastic member, a pulling force toward the bearing member 210 to the lifting member 240, to drive the lifting member 240 to descend. When the camera module 220 is retracted, the camera module 220 drives the lifting member 240 to descend by using the second elastic member. A principle of the second elastic member is similar to that of the first elastic member 201, and details are not described again.

For example, the second elastic member may be a spring, a dome, or the like. The second elastic member may alternatively be an elastic member made of an elastic material like rubber, foam, sponge, or latex. There may be at least one second elastic member. When there are a plurality of second elastic members, the second elastic members may be distributed in a spaced manner in the circumferential direction of the lifting member, and the second elastic members exert uniform forces on the lifting member.

It should be noted that, in the implementation in which only the first inner wall surface 261 is disposed, if the first elastic member 201 and/or the second elastic member are/is disposed, the lifting member 240 may descend. In the implementation in which both the first inner wall surface 261 and the second inner wall surface 262 are disposed, the first elastic member 201 and the second elastic member may not be disposed. If the first elastic member 201 and/or the second elastic member are/is disposed, the lifting member 240 is relatively easy to descend.

The following describes ascending and descending of the camera provided in embodiments of this application.

The camera apparatus 200 may include a distance detection member and a control member, where the control member is electrically connected to the distance detection member and the camera module 220, and the control member may be a control chip disposed on the main circuit board 140. The distance detection member is configured to detect a distance between the lifting member 240 and the bearing member 210, and the control member is configured to obtain the distance between the lifting member 240 and the bearing member 210 that is detected by the distance detection member, and determine a change of the distance between the lifting member 240 and the bearing member 210.

Specifically, when the control member determines that the distance between the lifting member 240 and the bearing member 210 becomes larger, the control member controls the camera to move away from the bearing member 210, so that the camera ascends. When the control member determines that the distance between the lifting member 240 and the bearing member 210 becomes smaller, the control member controls the camera to move toward the bearing member 210, so that the camera descends. In this way, the camera can ascend or descend through fitting between the distance detection member and the control member. For example, when an external force acts on the top protective cover 281, the top protective cover 281 drives the lifting member 240 to descend, the distance between the lifting member 240 and the bearing member 210 becomes smaller, and then the control member controls the camera to descend, to avoid damage to the camera module 220 when the top protective cover 281 descends. In the thickness direction of the camera apparatus 200, there may always be a spacing between the camera module 220 and the top protective cover 281, and the spacing may prevent an external force from directly acting on the camera module 220, thereby protecting the camera module 220.

For example, the distance detection member may include a Hall device and an induction magnet, where one of the Hall device and the induction magnet is connected to a structural component that is always static, for example, the static structural component may include the bearing member 210, a sub-circuit board 203, a bottom protection member 202, an optical image stabilization structure of the camera module 220, or the like; and the other of the Hall device and the induction magnet is connected to a lifting structural component, for example, the lifting structural component may include the lifting member 240, the top protective cover 281, the camera, the guide member 250, or the like. This is not limited in embodiments of this application as long as a change of the distance between the lifting member 240 and the bearing member 210 can be determined.

The Hall device and the induction magnet determine, by using the Hall effect, the change of the distance between the lifting member 240 and the bearing member 210. The Hall effect is a magnetoelectric effect, and the Hall voltage changes with the magnetic field strength. A magnetic field that is in a linear relationship with a distance is constructed to detect a change of the Hall voltage, to obtain an accurate movement distance change value. The Hall voltage changes with the magnetic field strength. When the magnetic field is stronger, the voltage is higher; and when the magnetic field is weaker, the voltage is lower. The Hall device converts a magnetic signal into an electrical signal, and transmits the electrical signal to the control member, to control the lifting member 240 to ascend or descend.

It should be noted that, detecting the distance between the lifting member 240 and the bearing member 210 by using the distance detection member may be directly detecting the distance between the lifting member 240 and the bearing member 210 or may be indirectly calculating the distance between the lifting member 240 and the bearing member 210 by detecting a distance between the static structural component (for example, the sub-circuit board 203) and the lifting structural component (for example, the top protective cover 281).

In some embodiments, as shown in FIG. 8, the camera apparatus 200 may include an anti-impact member 204, where the anti-impact member 204 is located on a side that is of the camera module 220 and that is away from the bearing member 210, and the anti-impact member 204 may ascend or descend as the camera ascends or descends. In the thickness direction of the camera apparatus 200, a spacing between the anti-impact member 204 and the protective cover 280 is less than a spacing between the camera module 220 and the protective cover 280. When the top protective cover 281 is subject to an external force F, if the top protective cover 281 needs to be in contact with a top structure of the camera module 220, the top protective cover 281 needs to be first in contact with the anti-impact member 204. This can protect the top structure of the camera module 220.

There may be a spacing between the anti-impact member 204 and the top protective cover 281 in the thickness direction of the camera apparatus 200. When the top protective cover 281 is subject to an external force, because of the spacing, the external force does not directly act on the anti-impact member 204, thereby protecting the anti-impact member 204. The top protective cover 281 drives the lifting member 240 to descend along the spacing under the external force. The control member determines that the distance between the lifting member 240 and the bearing member 210 becomes smaller, and then the control member controls the camera and the anti-impact member 204 to descend, to avoid damage to the anti-impact member 204 in a descending process of the top protective cover 281. If there is no such spacing, the top protective cover 281 is disposed in contact with the anti-impact member 204. When the top protective cover 281 is subject to an external force, the anti-impact member 204 blocks the descending of the top protective cover 281, and therefore, the top protective cover 281 cannot drive the lifting member 240 to descend. In this case, the distance between the lifting member 240 and the bearing member 210 does not change, the control member does not control the camera and the anti-impact member 204 to descend, and the anti-impact member 204 is easily damaged due to a large force between the anti-impact member 204 and the top protective cover 281. In addition, the camera module 220 may be damaged by the external force through the anti-impact member 204.

The camera apparatus 200 may include a seal configured to prevent dust, water, or the like from entering the camera apparatus 200, to protect the camera apparatus 200. The dust may be dust in an external environment, or may be dust generated by friction between structural components inside the electronic device 100 during movement, for example, dust generated by friction between the lifting member 240 and another structural component in ascending and descending processes.

The following describes the seal provided in embodiments of this application.

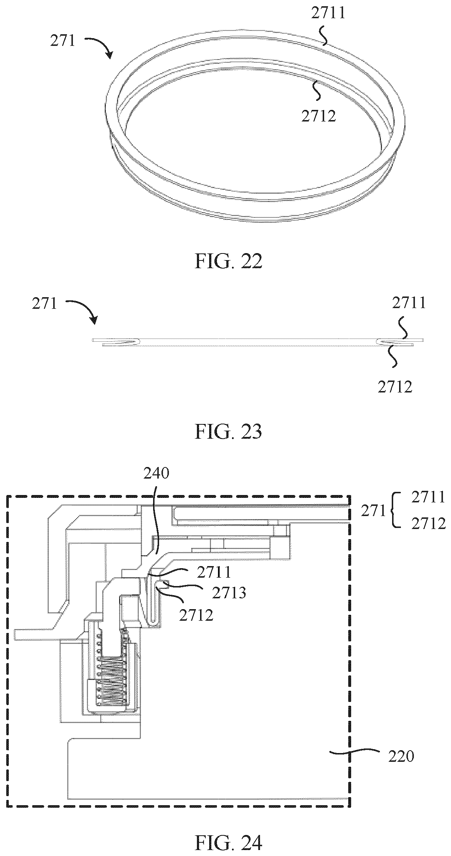

As shown in FIG. 22 to FIG. 29, the camera apparatus 200 may include a first seal 271. The following describes the first seal 271 provided in embodiments of this application.

The first seal 271 may be annular (as shown in FIG. 22 and FIG. 23). As shown in FIG. 24, the first seal 271 is annularly disposed on the outer wall surface of the camera module 220. The first seal 271 is located between the camera module 220 and the lifting member 240. A first connection end 2711 of the first seal 271 is connected to the lifting member 240, and a second connection end 2712 of the first seal 271 is connected to the camera module 220. For example, the first connection end 2711 may be connected to the inner wall surface of the lifting member 240, and the second connection end 2712 is connected to the outer wall surface of the camera module 220. The first seal 271 is configured to prevent dust from entering and reaching the top of the camera module 220 through a space between the camera module 220 and the lifting member 240, to avoid impact on light collection of the camera module 220.

For example, the first connection end 2711 may be fastened to the inner wall surface of the lifting member 240, so that stability of the connection between the first connection end 2711 and the lifting member 240 is high. The first connection end 2711 is static relative to the lifting member 240, and the first connection end 2711 ascends and descends along with the lifting member 240.

In some examples, as shown in FIG. 8, the second connection end 2712 may be fastened to the outer wall surface of the camera module 220, and therefore, the second connection end 2712 is static relative to an outer wall surface of a part that is of the camera module 220 and that is connected to the second connection end 2712, and stability of the connection between the second connection end 2712 and the camera module 220 is high. For example, the second connection end 2712 may be fastened to an end face on a side that is of the camera module 220 and that is away from the bearing member 210, or the second connection end 2712 may be fastened to a circumferential outer wall surface of the camera module 220.

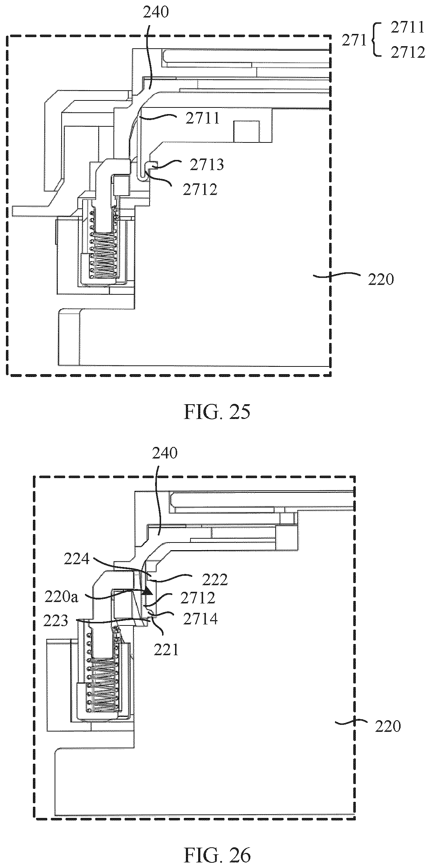

In some other examples, as shown in FIG. 24 and FIG. 25, the second connection end 2712 is detachably connected to the outer wall surface of the camera module 220, and therefore, the second connection end 2712 is static relative to an outer wall surface of a part that is of the camera module 220 and that is connected to the second connection end 2712. The second connection end 2712 is detachable, to help replace or repair the first seal 271. For example, the camera apparatus 200 may include a sealing ring 2713, where the sealing ring 2713 is sleeved on a circumferential outer wall surface of the camera module 220, and the sealing ring 2713 is detachably connected to the camera module 220. The second connection end 2712 is connected to the sealing ring 2713, and the second connection end 2712 is detachably connected to the camera module 220 through the sealing ring 2713. The sealing ring 2713 may be an elastic sealing ring, the sealing ring 2713 is in a stretched state, and the sealing ring 2713 abuts against the outer wall surface of the camera module 220 by using an elastic force. Alternatively, an outer screw thread is provided on the outer wall surface of the camera module 220, an inner screw thread is provided on the sealing ring 2713, and the sealing ring 2713 and the camera module 220 are connected through fitting between the inner and outer screw threads. Certainly, the sealing ring 2713 may alternatively be connected to the camera module 220 in another detachable manner.

The sealing ring 2713 and the second connection end 2712 may be connected in a manner of bonding, clamping, integral forming, or the like. A ring-shaped groove may be annularly provided on the circumferential outer wall surface of the camera module 220. The sealing ring 2713 may be accommodated in the groove. The groove may limit the sealing ring 2713, and improve the stability of the connection between the sealing ring 2713 and the camera module 220.

It should be noted that a maximum ascending stroke of the lifting member 240 is a first stroke, and a maximum ascending stroke of the camera may be a second stroke. The first stroke may be greater than or equal to the second stroke. In embodiments of this application, an example in which the first stroke is greater than the second stroke is used for description. When the camera apparatus 200 is in the extending state, the camera apparatus 200 is easily impacted by an external force. Because the first stroke is greater than the second stroke, the distance between the top protective cover 281 and the camera module 220 is large, so that a cushioning space between the top protective cover 281 and the camera module 220 is large, and the top protective cover 281 can be in contact with the camera module 220 only after moving a long distance toward the bearing member 210. In this case, the control member is provided with more response time to control the camera to descend when the top protective cover 281 descends under an external force. This can better protect the camera module 220. In addition, when the camera apparatus 200 is in the retracting state, the distance between the top protective cover 281 and the camera module 220 is small, so that the overall thickness of the camera apparatus 200 is small, which facilitates lightness and thinness of the electronic device 100.

If the first connection end 2711 is static relative to the lifting member 240, the second connection end 2712 is static relative to the outer wall surface of the part that is of the camera module 220 and that is connected to the second connection end 2712. In ascending and descending processes of the lifting member 240, the distance between the lifting member 240 and the camera module 220 changes, and a distance between the first connection end 2711 and the second connection end 2712 changes. The first seal 271 may be disposed as a deformable member, and the first seal 271 may deform in the ascending and descending processes, to avoid damage to the first seal 271 caused by a change of the distance between the first connection end 2711 and the second connection end 2712. In addition, the camera apparatus 200 may be sealed in an entire process in an extending state, a retracting state, and an intermediate state.

In some examples, the deformable first seal 271 is made of an elastic material, and when the camera apparatus 200 is in the extending state, the first seal 271 is in a stretched state. When the camera apparatus 200 is in the retracting state, a stretching degree of the first seal 271 is reduced. For example, when the camera apparatus 200 is in the retracting state, the first seal 271 may be in a compressed state. Alternatively, when the camera apparatus 200 is in the retracting state, the first seal 271 may continue to be in the stretched state, and the camera module 220 always provides a downward pulling force for the lifting member 240 by using the first seal 271, which helps the lifting member 240 descend. In addition, when the guide channel 260 includes only the first inner wall surface 261, the first seal 271 may be configured to drive the lifting member 240 to descend. A principle of the first seal 271 is similar to that of the first elastic member 201, and details are not described again.

It may be understood that at least one of the first seal 271, the first elastic member 201, and the second elastic member may be disposed to provide a downward driving force for the lifting member 240. In some embodiments, the first seal 271 and the second elastic member may be a same component.

In some other examples, the deformable first seal 271 is a folded element. As shown in FIG. 24, when the camera apparatus 200 is in the retracting state, the distance between the first connection end 2711 and the second connection end 2712 is small, and the first seal 271 is in the folded state. When the first seal 271 is in the folded state, an overlapping area of the first seal 271 is large. As shown in FIG. 25, when the camera apparatus 200 is in the extending state, the distance between the first connection end 2711 and the second connection end 2712 is large, and the first seal 271 is in the unfolded state. When the first seal 271 is in the unfolded state, an overlapping area of the first seal 271 is small.

In some implementations, as shown in FIG. 26, the second connection end 2712 is movably connected to the camera module 220. In the ascending and descending processes of the camera apparatus 200, the lifting member 240 drives the first connection end 2711 to ascend or descend, and the first connection end 2711 drives the second connection end 2712 to ascend or descend in the Z direction.

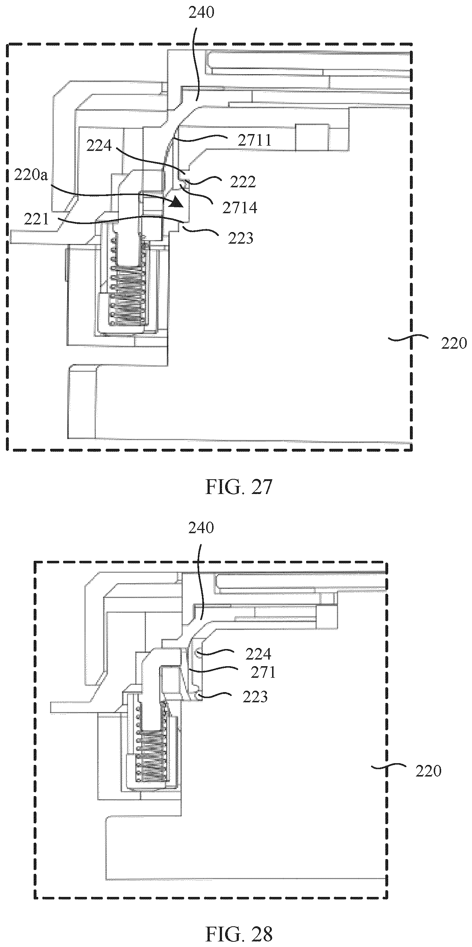

Specifically, a limiting groove 220a is annularly provided on the circumferential outer wall surface of the camera module 220, the second connection end 2712 includes an abutting part 2714, a side that is of the abutting part 2714 and that faces the limiting groove 220a protrudes, and the abutting part 2714 is located in the limiting groove 220a. In the thickness direction of the camera apparatus 200, the limiting groove 220a includes a first groove side wall 221 and a second groove side wall 222 that are spaced apart, and the first groove side wall 221 is located on a side that is of the second groove side wall 222 and that faces the bearing member 210. The first groove side wall 221 and the second groove side wall 222 limit the abutting part 2714. When the camera apparatus 200 is in the ascending and descending processes, the abutting part 2714 moves in an area between the first groove side wall 221 and the second groove side wall 222. As shown in FIG. 27, when the camera apparatus 200 is in the extending state, the abutting part 2714 abuts against the second groove side wall 222, so that sealing is implemented between the second connection end 2712 and the second groove side wall 222. As shown in FIG. 26, when the camera apparatus 200 is in the retracting state, the abutting part 2714 is connected to the first groove side wall 221, so that sealing is implemented between the second connection end 2712 and the first groove side wall 221. Therefore, when the camera apparatus 200 is in the extending state or the retracting state, sealing may be implemented between the second connection end 2712 and the camera module 220, to prevent dust from entering and reaching the top of the camera module 220 through a space between the camera module 220 and the lifting member 240, to avoid impact on light collection of the camera module 220.

The first seal 271 may be a rigid member, and the abutting part 2714 can effectively abut against the first groove side wall 221 or the second groove side wall 222, so that dust-proof is better implemented when the camera apparatus 200 is in the extending state or the retracting state.

In some examples, the limiting groove 220a may be formed after the circumferential outer wall surface of the camera module 220 is recessed inward. In some other examples, as shown in FIG. 26, a first abutting ring 223 and a second abutting ring 224 are annularly disposed on the circumferential outer wall surface of the camera module 220, the first abutting ring 223 and the second abutting ring 224 are spaced apart in the thickness direction of the camera apparatus 200, and an area between the first abutting ring 223 and the second abutting ring 224 forms the limiting groove 220a. The first abutting ring 223 is located on a side that is of the second abutting ring 224 and that faces the bearing member 210, the first groove side wall 221 is formed by an outer wall on a side that is of the first abutting ring 223 and that faces the second abutting ring 224, and the second groove side wall 222 is formed by an outer wall on a side that is of the second abutting ring 224 and that faces the first abutting ring 223. As shown in FIG. 27, when the camera apparatus 200 is in the extending state, the abutting part 2714 abuts against the second abutting ring 224, so that sealing is implemented between the second connection end 2712 and the second abutting ring 224. As shown in FIG. 26, when the camera apparatus 200 is in the retracting state, the abutting part 2714 abuts against the first abutting ring 223, so that sealing is implemented between the second connection end 2712 and the first abutting ring 223.

For example, as shown in FIG. 26 and FIG. 27, the first abutting ring 223 is fastened to the camera module 220, so that the first abutting ring 223 is connected to the camera module 220 stably. The first abutting ring 223 may be connected to the camera module 220 in a manner of bonding, welding, integral forming, or the like.

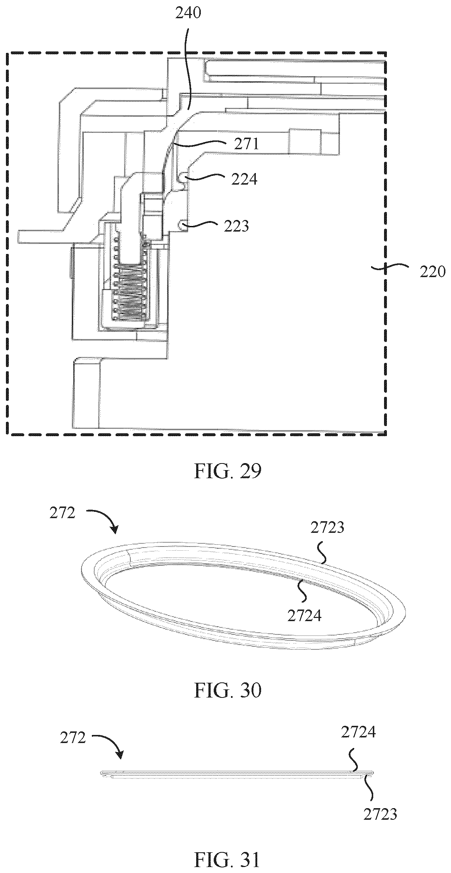

Alternatively, as shown in FIG. 28 and FIG. 29, the first abutting ring 223 is detachably connected to the camera module 220, to help replace or repair the first abutting ring 223. The first abutting ring 223 may be made of an elastic material, the first abutting ring 223 is in a stretched state, and the first abutting ring 223 abuts against the outer wall surface of the camera module 220 by using an elastic force. Alternatively, an outer screw thread is provided on the outer wall surface of the camera module 220, an inner screw thread is provided on the first abutting ring 223, and the first abutting ring 223 and the camera module 220 are connected through fitting between the inner and outer screw threads. Certainly, the first abutting ring 223 may alternatively be connected to the camera module 220 in another detachable manner.

For example, the second abutting ring 224 is fastened to the camera module 220, or the second abutting ring 224 is detachably connected to the camera module 220. A principle of the second abutting ring 224 is similar to that of the first abutting ring 223, and details are not described again.

As shown in FIG. 8, FIG. 30, and FIG. 31, the camera apparatus 200 may include a second seal 272. The following describes the second seal 272 provided in embodiments of this application.

The second seal 272 may be annular, and the second seal 272 is annularly disposed on the outer wall surface of the lifting member 240. The second seal 272 may be located between the inner protective cover 282 and the lifting member 240. A third connection end 2723 of the second seal 272 may be connected to the inner protective cover 282. For example, the third connection end 2723 is connected to a side that is of the second extension part 2822 (as shown in FIG. 8) of the inner protective cover 282 and that is away from the bearing member 210, or the third connection end 2723 is connected to an inner wall surface of the inner protective cover 282. A fourth connection end 2724 of the second seal 272 may be connected to the outer wall surface of the lifting member 240. The second seal 272 may prevent water of an external environment from entering the camera apparatus 200 through a space between the lifting member 240 and the inner protective cover 282, to protect the camera apparatus 200. Certainly, the third connection end 2723 may also be connected to an inner wall surface of the outer protective cover 283, and the second seal 272 may prevent water of an external environment from entering the camera apparatus 200 through a space between the lifting member 240 and the fourth extension part 2834, to protect the camera apparatus 200.

It should be noted that, if the third connection end 2723 is static relative to the inner protective cover 282, the fourth connection end 2724 is static relative to the lifting member 240. In the ascending and descending processes of the lifting member 240, a position relationship between the lifting member 240 and the inner protective cover 282 changes, and a distance between the third connection end 2723 and the fourth connection end 2724 changes. The second seal 272 may be disposed as a deformable member, and the second seal 272 may deform in the ascending and descending processes of the camera apparatus 200, to avoid damage to the second seal 272 caused by the change of the distance between the third connection end 2723 and the fourth connection end 2724. In addition, the camera apparatus 200 may be sealed in an entire process in an extending state, a retracting state, and an intermediate state.

For example, the third connection end 2723 is connected to the side that is of the second extension part 2822 (as shown in FIG. 8) and that is away from the bearing member 210. In this case, the third connection end 2723 is relatively easy to mount. In some examples, the deformable second seal 272 is made of an elastic material, and when the camera apparatus 200 is in the retracting state, the first seal 271 is in a stretched state. When the camera apparatus 200 is in the extending state, a stretching degree of the first seal 271 is reduced. For example, the first seal 271 may be in a compressed state. A principle of the second seal 272 is similar to that of the first seal 271, and details are not described again. In some other examples, the deformable first seal 271 is a folded element. When the camera apparatus 200 is in the retracting state, the distance between the third connection end 2723 and the fourth connection end 2724 is large, and the second seal 272 is in an unfolded state (as shown in FIG. 30). When the camera apparatus 200 is in the extending state, the distance between the third connection end 2723 and the fourth connection end 2724 is small, and the second seal 272 is in a folded state (as shown in FIG. 31). A principle of the second seal 272 is similar to that of the first seal 271, and details are not described again.

As shown in FIG. 5, a third seal 273 may be disposed between the light-transmitting member 284 and the top protective cover 281. The third seal 273 may be annular. The third seal 273 is configured to implement sealing between the top protective cover 281 and the light-transmitting member 284, to protect the camera module 220. In addition, the third seal 273 may further have a bonding function.

A fourth seal 274 may be disposed between the lifting member 240 and the top protective cover 281. The fourth seal 274 may be annular. The fourth seal 274 covers an end face on the side that is of the lifting member 240 and that is away from the bearing member 210. The fourth seal 274 is configured to implement sealing between the top protective cover 281 and the lifting member 240, to protect the camera module 220. In addition, the fourth seal 274 may further have a bonding function.

A fifth seal 275 may be disposed between the inner protective cover 282 and the bearing member 210. The fifth seal 275 is located on an end face on a side that is of the bearing member 210 and that faces the top protective cover 281. The fifth seal 275 is located between the first extension part 2821 and the bearing member 210, and is configured to implement sealing between the inner protective cover 282 and the bearing member 210, to protect the camera module 220. In addition, the fifth seal 275 may further have a bonding function.

As shown in FIG. 6, the first extension part 2821 may be located in the housing of the electronic device 100. A sixth seal 276 may be disposed between the rear cover 120 and a side that is of the first extension part 2821 and that is away from the bearing member 210, and the sixth seal 276 may be annular. The sixth seal 276 may implement sealing between the first extension part 2821 and the rear cover 120, to ensure sealing performance of the electronic device.

Still refer to FIG. 5. A seventh seal 277 is disposed on a side that is of the bearing member 210 and that is away from the top protective cover 281. The seventh seal 277 may be annular. The seventh seal 277 is located between the optical image stabilization structure and the bearing member 210, to protect the camera module 220. In addition, the seventh seal 277 may further have a bonding function.

It should be noted that, a material of at least one of the various seals in the foregoing embodiments includes but is not limited to rubber, foam, silicone, or the like.

In some embodiments, a limiting component is disposed between the lifting member 240 and the inner protective cover 282, and the limiting component is configured to prevent the lifting member 240 from rotating under the drive of the rotating member 230. If the lifting member 240 also rotates when the rotating member 230 rotates, the rotating motion of the rotating member 230 cannot be converted into the lifting motion of the lifting member 240. Therefore, the limiting component needs to be disposed to limit the rotation of the lifting member 240 on the XY plane. As shown in FIG. 5, the limiting component may include a limiting protrusion part 2823 and a limiting recess part 241. One of the limiting protrusion part 2823 and the limiting recess part 241 is located on the outer wall surface of the lifting member 240, the other of the limiting protrusion part 2823 and the limiting recess part 241 is located on the inner wall surface of the inner protective cover 282, and the limiting protrusion part 2823 is located in the limiting recess part 241. The limiting protrusion part 2823 moves in the limiting recess part 241 in the Z direction. The limiting protrusion part 2823 and the limiting recess part 241 are disposed, so that the rotation of the lifting member 240 on the XY plane can be limited. In addition, a guide function may be further performed on a lifting direction of the lifting member 240.

The following describes the first drive assembly 290 provided in embodiments of this application.

The first drive assembly 290 may be in, but is not limited to, manners such as electric, pneumatic, hydraulic, worm drive, gear drive, electromagnetic drive, electric-liquid drive, gas-liquid drive, or electromagnetic-hydraulic drive. In addition, the second drive assembly is similar to the first drive assembly, and details are not described again.

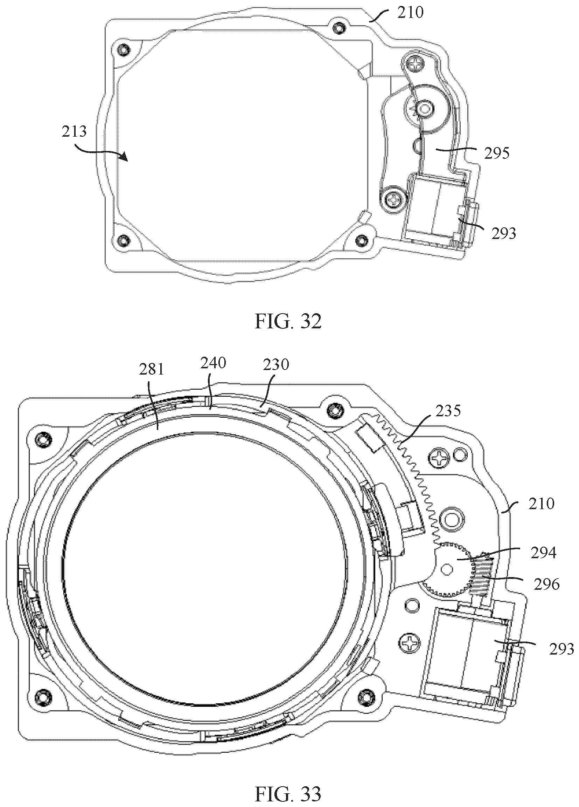

The first drive assembly 290 may be located on the outer side of the rotating member 230, so that a size of the rotating member 230 is small, which facilitates miniaturization of the camera apparatus 200. As shown in FIG. 5 and FIG. 32, a drive cover 295 covers a side that is of at least a part of the first drive assembly 290 and that is away from the bearing member 210, to protect the part of the first drive assembly 290. For example, the drive cover 295 may be fastened to the bearing member 210 in a manner of a screw, dispensing, welding, or the like.

The first drive assembly 290 may include the drive member 293, the drive member 293 is configured to drive the rotating member 230 to rotate, and the drive member 293 may include but is not limited to a micro motor.

In some embodiments, refer to FIG. 5 and FIG. 33. An extension direction of a rotating shaft of the drive member 293 may be perpendicular to the Z direction (located on the XY plane), and the drive member 293 is horizontally placed on the bearing member 210, so that a thickness of the camera apparatus 200 can be reduced. In this case, a worm 296 may be disposed on the rotating shaft of the drive member 293, the first drive assembly 290 may include a worm gear 294 fitting the worm 296, and the worm 296 drives the worm gear 294 to rotate on the XY plane. The first drive assembly 290 may further include a first gear 291 and a second gear 292. The first gear 291 and the worm gear 294 are disposed coaxially and rotate synchronously. A tooth structure 235 may be disposed on the outer side of the rotating member 230. The second gear 292 is separately meshed with the first gear 291 and the tooth structure 235. The drive member 293 sequentially drives the worm 296, the worm gear 294, the first gear 291, the second gear 292, and the tooth structure 235 to rotate, so as to drive the rotating member 230 to rotate. In some other examples, the first gear 291 may be meshed with the tooth structure 235, to drive the rotating member 230 to rotate, so that the second gear 292 does not need to be disposed. In this case, a structure of the first drive assembly 290 is relatively simple.

In some other examples, the first drive assembly 290 may further include a third gear (not shown in the figure). The third gear may be coaxially disposed with the second gear 292, and is meshed with the first gear 291 on the XY plane. The first gear 291 is connected to the second gear 292 via the third gear. Alternatively, the third gear may be separately meshed with the first gear 291 and the second gear 292. For example, there may be at least one third gear. When there are a plurality of third gears, the plurality of third gears may be meshed and connected on the XY plane, or some or all of the plurality of third gears may be disposed coaxially. Dimensions of the foregoing gears may be the same, partially different, or completely different.

In some embodiments, the extension direction of the rotating shaft of the drive member 293 may be the Z direction, and the drive member 293 is vertically placed on the bearing member 210. A driving gear is coaxially disposed on the rotating shaft of the drive member 293, and the driving gear may be meshed with the tooth structure 235, to drive the rotating member 230 to rotate. In some other examples, the first drive assembly 290 may include the first gear 291. The first gear 291 is separately meshed with the drive gear and the tooth structure 235 on the XY plane. The drive member 293 sequentially drives the drive gear, the first gear 291, and the tooth structure 235 to rotate. In some other examples, the first drive assembly 290 may include the second gear 292. The second gear 292 and the first gear 291 may be disposed coaxially and rotate synchronously. The first gear 291 is meshed with the drive gear, and the second gear 292 is meshed with the tooth structure 235. Alternatively, the first gear 291 is separately meshed with the second gear 292 and the drive gear on the XY plane, and the second gear 292 is meshed with the tooth structure 235. In some other examples, the first drive assembly 290 may further include the third gear. A disposition manner of the third gear is similar to that in the implementation of the worm 296 and the worm gear 294, and details are not described again.

The first drive assembly 290 may include a conductive member, and the conductive member may be a flexible circuit board. The drive member 293 is electrically connected to the sub-circuit board 203 via the conductive member, to provide power input for the drive member 293.

In the description of embodiments of this application, it should be noted that, unless otherwise explicitly stipulated and restricted, terms "installation", "joint connection", and "connection" should be understood broadly, which, for example, may be a fixed connection, or may be an indirect connection by using a medium, or may be an internal communication between two components, or may be an interactive relationship between two components. A person of ordinary skill in the art may understand specific meanings of the foregoing terms in embodiments of this application based on specific cases.

The terms such as "first", "second", "third", "fourth", and the like (if any) are intended to distinguish between similar objects but do not necessarily indicate a specific order or sequence.

Finally, it should be noted that the foregoing embodiments are merely used to describe the technical solutions in embodiments of this application, but not to limit the technical solutions. Although embodiments of this application are described in detail with reference to the foregoing embodiments, a person of ordinary skill in the art should understand that the technical solutions recorded in the foregoing embodiments may still be modified, or some or all of technical features thereof may be equivalently replaced. However, these modifications or replacements do not depart from the scope of the technical solutions in embodiments of this application.

## Claims

1. A camera apparatus, comprising a bearing member (210), a first drive assembly (290), a camera module (220), a rotating member (230), and a lifting member (240), wherein
the camera module (220) comprises a camera and a second drive assembly, the second drive assembly is connected to the camera, and the second drive assembly is configured to drive the camera to ascend or descend;
the first drive assembly (290) is mounted on the bearing member (210), and the rotating member (230) is rotatably disposed on the bearing member (210);
the first drive assembly (290) fits the rotating member (230), the rotating member (230) fits the lifting member (240) and the rotating member (230) is configured to drive the lifting member (240) to ascend or descend during rotation, **characterized in that**
the lifting member (240) is decoupled from the camera so that it does not drive the camera to ascend or descend; and
that both the rotating member (230) and the lifting member (240) are tubular, an accommodation area is provided on an inner side of the rotating member (230) and the lifting member (240), and the camera is located in the accommodation area and ascends and descends in the accommodation area.

2. The camera apparatus according to claim 1, further comprising a guide member (250), wherein an inclined guide channel (260) is disposed on one of the rotating member (230) and the lifting member (240), the other of the rotating member (230) and the lifting member (240) is connected to a first end (251) of the guide member (250), a bump (253) that fits the guide channel (260) is disposed on a second end (252) of the guide member (250), and the bump (253) is inserted into the guide channel (260) and moves in an extension direction of the guide channel (260).

3. The camera apparatus according to claim 2, wherein the guide channel (260) comprises a first inner wall surface (261), and the first inner wall surface (261) is located on a side of the bump (253) that is away from the first end (251).

4. The camera apparatus according to claim 3, wherein the guide channel (260) comprises a second inner wall surface (262) spaced apart from the first inner wall surface (261), and the second inner wall surface (262) is located on a side of the bump (253) that faces the first end (251).

5. The camera apparatus according to claim 2, wherein a cushioning member (205) is disposed on one, connected to the first end (251), of the rotating member (230) and the lifting member (240), the first end (251) is connected to the cushioning member (205), and the cushioning member (205) is configured to implement a cushioning function when the lifting member (240) moves toward the bearing member (210).

6. The camera apparatus according to claim 1, further comprising a distance detection member and a control member, wherein the control member is electrically connected to the distance detection member and the camera module (220), and the distance detection member is configured to detect a distance between the lifting member (240) and the bearing member (210); and
when the distance between the lifting member (240) and the bearing member (210) becomes larger, the control member is configured to control the camera to move away from the bearing member (210); or
when the distance between the lifting member (240) and the bearing member (210) becomes smaller, the control member is configured to control the camera to move toward the bearing member (210).

7. The camera apparatus according to claim 1, wherein a first seal (271) is annularly disposed between the camera module (220) and the lifting member (240), a first connection end (2711) of the first seal (271) is connected to the lifting member (240), and a second connection end (2712) of the first seal (271) is connected to the camera module (220).

8. The camera apparatus according to claim 7, wherein the first seal (271) is a deformable member, and the second connection end (2712) is static relative to at least a part of the camera module (220).

9. The camera apparatus according to claim 8, further comprising a sealing ring (2713), wherein the sealing ring (2713) is sleeved on a circumferential outer wall surface of the camera module (220) and is detachably connected to the camera module (220), and the second connection end (2712) is connected to the sealing ring (2713).

10. The camera apparatus according to claim 7, wherein the first seal (271) is a rigid member, the second connection end (2712) is movably connected to the camera module (220), a limiting groove (220a) is annularly provided on a circumferential outer wall surface of the camera module (220), and at least a part of the second connection end (2712) is located in the limiting groove (220a);
in a thickness direction of the camera apparatus, the limiting groove (220a) comprises a first groove side wall (221) and a second groove side wall (222) that are spaced apart, and the first groove side wall (221) is located on a side of the second groove side wall (222) that faces the bearing member (210); and
when the camera apparatus is in an extending state, the second connection end (2712) abuts against the second groove side wall (222); or
when the camera apparatus is in a retracting state, the second connection end (2712) abuts against the first groove side wall (221).

11. The camera apparatus according to claim 10, wherein a first abutting ring (223) and a second abutting ring (224) are annularly disposed on the circumferential outer wall surface of the camera module (220), the first abutting ring (223) and the second abutting ring (224) are spaced apart in the thickness direction of the camera apparatus, the first abutting ring (223) is located on a side of the second abutting ring (224) that faces the bearing member (210), the first groove side wall (221) is formed by an outer wall on a side of the first abutting ring (223) that faces the second abutting ring (224), and the second groove side wall (222) is formed by an outer wall on a side of the second abutting ring (224) that faces the first abutting ring (223).

12. The camera apparatus according to claim 11, wherein both the first abutting ring (223) and the second abutting ring (224) are fastened to the camera module (220); or
both the first abutting ring (223) and the second abutting ring (224) are detachably connected to the camera module (220).

13. The camera apparatus according to claim 8, wherein the first seal (271) is an elastic seal in a stretched state; or
the first seal (271) is a foldable seal, and when the camera apparatus is in an extending state, the first seal (271) is in an unfolded state, or when the camera apparatus is in a retracting state, the first seal (271) is in a folded state.

14. An electronic device, comprising a housing and the camera apparatus according to any one of claims 1 to 13, wherein at least a part of the camera apparatus is located in the housing.

## Patentansprüche

1. Kameravorrichtung, umfassend ein Lagerelement (210), eine erste Antriebsbaugruppe (290), ein Kameramodul (220), ein Drehelement (230) und ein Hubelement (240), wobei das Kameramodul (220) eine Kamera und eine zweite Antriebsbaugruppe umfasst, die zweite Antriebsbaugruppe mit der Kamera verbunden ist und die zweite Antriebsbaugruppe dazu konfiguriert ist, die Kamera dazu anzutreiben, zu steigen oder zu sinken;
die erste Antriebsbaugruppe (290) auf dem Lagerelement (210) montiert ist und das Drehelement (230) drehbar auf dem Lagerelement (210) angeordnet ist;
die erste Antriebsbaugruppe (290) zu dem Drehelement (230) passt, das Drehelement (230) zu dem Hubelement (240) passt und das Drehelement (230) dazu konfiguriert ist, das Hubelement (240) dazu anzutreiben, während einer Drehung zu steigen oder zu sinken, **dadurch gekennzeichnet, dass**
das Hubelement (240) von der Kamera entkoppelt ist, sodass es die Kamera nicht dazu antreibt, zu steigen oder zu sinken; und dass sowohl das Drehelement (230) als auch das Hubelement (240) rohrförmig sind, ein Aufnahmebereich auf einer inneren Seite des Drehelements (230) und des Hubelements (240) bereitgestellt ist und sich die Kamera in dem Aufnahmebereich befindet und in dem Aufnahmebereich steigt und sinkt.

2. Kameravorrichtung nach Anspruch 1, ferner umfassend ein Führungselement (250), wobei ein geneigter Führungskanal (260) auf einem des Drehelements (230) und des Hubelements (240) angeordnet ist, das andere des Drehelements (230) und des Hubelements (240) mit einem ersten Ende (251) des Führungselements (250) verbunden ist, ein Vorsprung (253), der zu dem Führungskanal (260) passt, auf einem zweiten Ende (252) des Führungselements (250) angeordnet ist und der Vorsprung (253) in den Führungskanal (260) eingeführt ist und sich in eine Erstreckungsrichtung des Führungskanals (260) bewegt.

3. Kameravorrichtung nach Anspruch 2, wobei der Führungskanal (260) eine erste innere Wandoberfläche (261) umfasst und sich die erste innere Wandoberfläche (261) auf einer Seite des Vorsprungs (253) befindet, die von dem ersten Ende (251) abgewandt ist.

4. Kameravorrichtung nach Anspruch 3, wobei der Führungskanal (260) eine zweite innere Wandoberfläche (262) umfasst, die von der ersten inneren Wandoberfläche (261) beabstandet ist, und sich die zweite innere Wandoberfläche (262) auf einer Seite des Vorsprungs (253) befindet, die dem ersten Ende (251) zugewandt ist.

5. Kameravorrichtung nach Anspruch 2, wobei ein Dämpfungselement (205) auf einem mit dem ersten Ende (251) verbundenen des Drehelements (230) und des Hubelements (240) angeordnet ist, das erste Ende (251) mit dem Dämpfungselement (205) verbunden ist und das Dämpfungselement (205) dazu konfiguriert ist, eine Dämpfungsfunktion umzusetzen, wenn sich das Hubelement (240) in Richtung des Lagerelements (210) bewegt.

6. Kameravorrichtung nach Anspruch 1, ferner umfassend ein Abstandsdetektionselement und ein Steuerelement, wobei das Steuerelement elektrisch mit dem Abstandsdetektionselement und dem Kameramodul (220) verbunden ist und das Abstandsdetektionselement dazu konfiguriert ist, einen Abstand zwischen dem Hubelement (240) und dem Lagerelement (210) zu detektieren; und,
wenn der Abstand zwischen dem Hubelement (240) und dem Lagerelement (210) größer wird, das Steuerelement dazu konfiguriert ist, die Kamera zu steuern, um sich von dem Lagerelement (210) weg zu bewegen; oder,
wenn der Abstand zwischen dem Hubelement (240) und dem Lagerelement (210) kleiner wird, das Steuerelement dazu konfiguriert ist, die Kamera zu steuern, um sich in Richtung des Lagerelements (210) zu bewegen.

7. Kameravorrichtung nach Anspruch 1, wobei eine erste Dichtung (271) ringförmig zwischen dem Kameramodul (220) und dem Hubelement (240) angeordnet ist, ein erstes Verbindungsende (2711) der ersten Dichtung (271) mit dem Hubelement (240) verbunden ist und ein zweites Verbindungsende (2712) der ersten Dichtung (271) mit dem Kameramodul (220) verbunden ist.

8. Kameravorrichtung nach Anspruch 7, wobei die erste Dichtung (271) ein verformbares Element ist und das zweite Verbindungsende (2712) in Bezug auf mindestens einen Teil des Kameramoduls (220) statisch ist.

9. Kameravorrichtung nach Anspruch 8, ferner umfassend einen Dichtungsring (2713), wobei der Dichtungsring (2713) auf einer umlaufenden äußeren Wandoberfläche des Kameramoduls (220) aufgesetzt ist und lösbar mit dem Kameramodul (220) verbunden ist und das zweite Verbindungsende (2712) mit dem Dichtungsring (2713) verbunden ist.

10. Kameravorrichtung nach Anspruch 7, wobei die erste Dichtung (271) ein starres Element ist, das zweite Verbindungsende (2712) bewegbar mit dem Kameramodul (220) verbunden ist, eine Begrenzungsnut (220a) ringförmig auf einer umlaufenden äußeren Wandoberfläche des Kameramoduls (220) bereitgestellt ist und sich mindestens ein Teil des zweiten Verbindungsendes (2712) in der Begrenzungsnut (220a) befindet;
in einer Dickenrichtung der Kameravorrichtung die Begrenzungsnut (220a) eine erste Nutseitenwand (221) und eine zweite Nutseitenwand (222) umfasst, die voneinander beabstandet sind, und sich die erste Nutseitenwand (221) auf einer Seite der zweiten Nutseitenwand (222) befindet, die dem Lagerelement (210) zugewandt ist; und,
wenn sich die Kameravorrichtung in einem sich erstreckenden Zustand befindet, das zweite Verbindungsende (2712) an der zweiten Nutseitenwand (222) anliegt; oder,
wenn sich die Kameravorrichtung in einem einfahrenden Zustand befindet, das zweite Verbindungsende (2712) an der ersten Nutseitenwand (221) anliegt.

11. Kameravorrichtung nach Anspruch 10, wobei ein erster Anlegering (223) und ein zweiter Anlegering (224) ringförmig auf der umlaufenden äußeren Wandoberfläche des Kameramoduls (220) angeordnet sind, der erste Anlegering (223) und der zweite Anlegering (224) in der Dickenrichtung der Kameravorrichtung beabstandet sind, sich der erste Anlegering (223) auf einer Seite des zweiten Anlegerings (224) befindet, die dem Lagerelement (210) zugewandt ist, die erste Nutseitenwand (221) durch eine äußere Wand auf einer Seite des ersten Anlegerings (223) gebildet ist, die dem zweiten Anlegering (224) zugewandt ist, und die zweite Nutseitenwand (222) durch eine äußere Wand auf einer Seite des zweiten Anlegerings (224) gebildet ist, die dem ersten Anlegering (223) zugewandt ist.

12. Kameravorrichtung nach Anspruch 11, wobei sowohl der erste Anlegering (223) als auch der zweite Anlegering (224) an dem Kameramodul (220) befestigt sind; oder
sowohl der erste Anlegering (223) als auch der zweite Anlegering (224) lösbar mit dem Kameramodul (220) verbunden sind.

13. Kameravorrichtung nach Anspruch 8, wobei die erste Dichtung (271) eine elastische Dichtung in einem gedehnten Zustand ist; oder
die erste Dichtung (271) eine faltbare Dichtung ist und, wenn sich die Kameravorrichtung in einem sich erstreckenden Zustand befindet, sich die erste Dichtung (271) in einem ungefalteten Zustand befindet oder, wenn sich die Kameravorrichtung in einem einfahrenden Zustand befindet, sich die erste Dichtung (271) in einem gefalteten Zustand befindet.

14. Elektronische Einrichtung, umfassend ein Gehäuse und die Kameravorrichtung nach einem der Ansprüche 1 bis 13, wobei sich mindestens ein Teil der Kameravorrichtung in dem Gehäuse befindet.

## Revendications

1. Appareil de caméra, comprenant un élément porteur (210), un premier ensemble d'entraînement (290), un module de caméra (220), un élément rotatif (230) et un élément de levage (240), dans lequel
le module de caméra (220) comprend une caméra et un second ensemble d'entraînement, le second ensemble d'entraînement est relié à la caméra, et le second ensemble d'entraînement est configuré pour amener la caméra à monter ou à descendre ;
le premier ensemble d'entraînement (290) est monté sur l'élément porteur (210), et l'élément rotatif (230) est disposé de manière rotative sur l'élément porteur (210) ;
le premier ensemble d'entraînement (290) s'emboîte dans l'élément rotatif (230), l'élément rotatif (230) s'emboîte dans l'élément de levage (240) et
l'élément rotatif (230) est configuré pour amener l'élément de levage (240) à monter ou à descendre pendant la rotation, **caractérisé en ce que**
l'élément de levage (240) est découplé de la caméra afin qu'il n'amène pas la caméra à monter ou à descendre ; et
que l'élément rotatif (230) et l'élément de levage (240) sont tous les deux tubulaires, qu'une zone d'hébergement est prévue sur un côté intérieur de l'élément rotatif (230) et de l'élément de levage (240), et que la caméra est située dans la zone d'hébergement et monte et descend dans la zone d'hébergement.

2. Appareil de caméra selon la revendication 1, comprenant en outre un élément de guidage (250), dans lequel un canal de guidage incliné (260) est disposé sur l'un de l'élément rotatif (230) et de l'élément de levage (240), l'autre de l'élément rotatif (230) et de l'élément de levage (240) est relié à une première extrémité (251) de l'élément de guidage (250), une bosse (253) qui s'adapte au canal de guidage (260) est disposée sur une seconde extrémité (252) de l'élément de guidage (250), et la bosse (253) est insérée dans le canal de guidage (260) et se déplace dans le sens d'extension du canal de guidage (260).

3. Appareil de caméra selon la revendication 2, dans lequel le canal de guidage (260) comprend une première surface de paroi intérieure (261), et la première surface de paroi intérieure (261) est située sur un côté de la bosse (253) qui est éloigné de la première extrémité (251).

4. Appareil de caméra selon la revendication 3, dans lequel le canal de guidage (260) comprend une seconde surface de paroi intérieure (262) espacée de la première surface de paroi intérieure (261), et la seconde surface de paroi intérieure (262) est située sur un côté de la bosse (253) qui fait face à la première extrémité (251).

5. Appareil de caméra selon la revendication 2, dans lequel un élément d'amortissement (205) est disposé sur l'un de l'élément rotatif (230) et de l'élément de levage (240), relié à la première extrémité (251), la première extrémité (251) est reliée à l'élément d'amortissement (205), et l'élément d'amortissement (205) est configuré pour mettre en œuvre une fonction d'amortissement lorsque l'élément de levage (240) se déplace vers l'élément porteur (210).

6. Appareil de caméra selon la revendication 1, comprenant en outre un élément de détection de distance et un élément de commande, dans lequel l'élément de commande est relié électriquement à l'élément de détection de distance et au module de caméra (220), et l'élément de détection de distance est configuré pour détecter une distance entre l'élément de levage (240) et l'élément porteur (210) ; et
lorsque la distance entre l'élément de levage (240) et l'élément porteur (210) augmente, l'élément de commande est configuré pour commander à la caméra de s'éloigner de l'élément porteur (210) ; ou
lorsque la distance entre l'élément de levage (240) et l'élément porteur (210) diminue, l'élément de commande est configuré pour commander à la caméra de s'approcher de l'élément porteur (210).

7. Appareil de caméra selon la revendication 1, dans lequel un premier joint (271) est disposé de manière annulaire entre le module de caméra (220) et l'élément de levage (240), une première extrémité de connexion (2711) du premier joint (271) est connectée à l'élément de levage (240), et une seconde extrémité de connexion (2712) du premier joint (271) est reliée au module de caméra (220).

8. Appareil de caméra selon la revendication 7, dans lequel le premier joint (271) est un élément déformable, et la seconde extrémité de connexion (2712) est statique par rapport à au moins une partie du module de caméra (220).

9. Appareil de caméra selon la revendication 8, comprenant en outre une bague d'étanchéité (2713), dans lequel la bague d'étanchéité (2713) est enroulée sur une surface de paroi extérieure circonférentielle du module de caméra (220) et est reliée de manière amovible au module de caméra (220), et la seconde extrémité de connexion (2712) est reliée à la bague d'étanchéité (2713).

10. Appareil de caméra selon la revendication 7, dans lequel le premier joint (271) est un élément rigide, la seconde extrémité de connexion (2712) est reliée de manière mobile au module de caméra (220), une rainure de limitation (220a) est prévue de manière annulaire sur une surface de paroi extérieure circonférentielle du module de caméra (220), et au moins une partie de la seconde extrémité de connexion (2712) est située dans la rainure de limitation (220a) ;
dans le sens de l'épaisseur de l'appareil de caméra, la rainure de limitation (220a) comprend une première paroi latérale de rainure (221) et une seconde paroi latérale de rainure (222) qui sont espacées, et la première paroi latérale de rainure (221) est située sur un côté de la seconde paroi latérale de rainure (222) qui fait face à l'élément porteur (210) ; et
lorsque l'appareil de caméra est en position déployée, la seconde extrémité de connexion (2712) vient en butée contre la seconde paroi latérale de rainure (222) ; ou
lorsque l'appareil de caméra est en état de rétraction, la seconde extrémité de connexion (2712) vient en butée contre la première paroi latérale de rainure (221).

11. Appareil de caméra selon la revendication 10, dans lequel une première bague de butée (223) et une seconde bague de butée (224) sont disposées de manière annulaire sur la surface de la paroi extérieure circonférentielle du module de caméra (220), la première bague de butée (223) et la seconde bague de butée (224) sont espacées dans le sens de l'épaisseur de l'appareil de caméra, la première bague de butée (223) est située sur un côté de la seconde bague de butée (224) qui fait face à l'élément porteur (210), la première paroi latérale de rainure (221) est formée par une paroi extérieure sur un côté de la première bague de butée (223) qui fait face à la seconde bague de butée (224), et la seconde paroi latérale de rainure (222) est formée par une paroi extérieure sur un côté de la seconde bague de butée (224) qui fait face à la première bague de butée (223).

12. Appareil de caméra selon la revendication 11, dans lequel la première bague de butée (223) et la seconde bague de butée (224) sont toutes les deux fixées au module de caméra (220) ; ou
la première bague de butée (223) et la seconde bague de butée (224) sont toutes les deux reliées de manière détachable au module de caméra (220).

13. Appareil de caméra selon la revendication 8, dans lequel le premier joint (271) est un joint élastique à l'état étiré ; ou le premier joint (271) est un joint pliable, et lorsque l'appareil de caméra est en état d'extension, le premier joint (271) est en état déplié, ou lorsque l'appareil de caméra est en état de rétraction, le premier joint (271) est en état plié.

14. Dispositif électronique, comprenant un boîtier et l'appareil de caméra selon l'une quelconque des revendications 1 à 13, dans lequel au moins une partie de l'appareil de caméra est située dans le boîtier.
